(19) Europäisches Patentamt
European Patent Office
Office européen des brevets

(11) EP 4 389 779 A1

(12) EUROPEAN PATENT APPLICATION
published in accordance with Art. 153(4) EPC

(43) Date of publication:
**26.06.2024 Bulletin 2024/26**

(21) Application number: **22858243.3**

(22) Date of filing: **21.07.2022**

(51) International Patent Classification (IPC):
***C08F 8/00*** *(2006.01)* ***C08F 20/36*** *(2006.01)*
***G02F 1/061*** *(2006.01)* ***G02F 1/361*** *(2006.01)*

(52) Cooperative Patent Classification (CPC):
**C08F 8/00; C08F 20/36; G02F 1/061; G02F 1/361**

(86) International application number:
**PCT/JP2022/028374**

(87) International publication number:
**WO 2023/021921 (23.02.2023 Gazette 2023/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.08.2021 JP 2021134575**

(71) Applicant: **National Institute of Information and Communications Technology**
**Koganei-shi,**
**Tokyo 184-8795 (JP)**

(72) Inventors:
- **OTOMO, Akira**
  **Koganei-shi, Tokyo 184-8795 (JP)**
- **TANAKA, Kouichi**
  **Koganei-shi, Tokyo 184-8795 (JP)**
- **YAMADA, Toshiki**
  **Koganei-shi, Tokyo 184-8795 (JP)**
- **YAMADA, Chiyumi**
  **Koganei-shi, Tokyo 184-8795 (JP)**
- **KAMADA, Shun**
  **Koganei-shi, Tokyo 184-8795 (JP)**
- **UEDA, Rieko**
  **Koganei-shi, Tokyo 184-8795 (JP)**

(74) Representative: **De Clercq & Partners**
**Edgard Gevaertdreef 10a**
**9830 Sint-Martens-Latem (BE)**

# (54) POLYMER AND LIGHT CONTROL DEVICE

(57) Provided is a polymer capable of being suitably used for an optical control element useful in shorter wavelength bands than the C band. A polymer represented by the formula (1).

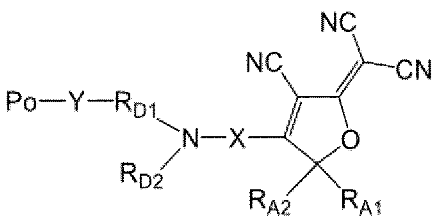

(1)

[In the formula (1), $R_{A1}$ and $R_{A2}$ are each independently an alkyl group having 1 to 10 carbon atoms, an aryl group having 6 to 12 carbon atoms, or an alkyl aryl group having 7 to 15 carbon atoms, hydrogen atoms contained in the alkyl group, the aryl group, and the alkyl aryl group are optionally substituted with halogen atoms, and $R_{A1}$ and $R_{A2}$ are optionally linked to each other to form a 3- to 12-membered saturated alicyclic structure together with a carbon atom to which they are bonded. X represents a phenylene group, an ethylene group, or a phenylenevinylene group, $R_{D1}$ represents an alkanediyl group having 1 to 10 carbon atoms, $R_{D2}$ represents an alkyl group having 1 to 10 carbon atoms, and any carbon atoms contained in $R_{D1}$ and $R_{D2}$ are optionally linked to each other to form a 3- to 12-membered saturated heterocyclic structure together with a nitrogen atom to which $R_{D1}$ and $R_{D2}$ are bonded. Y represents a linking group. Po represents a polymer structure].

EP 4 389 779 A1

**Description**

TECHNICAL FIELD

The present invention relates to a polymer and an optical control element.

BACKGROUND ART

As electro-optic materials (EO materials) applicable to optical control elements such as optical modulators, optical switches, optical interconnects, optoelectronic circuits, wavelength converters, electric field sensors, THz wave generators/detectors and optical phased arrays, the use of inorganic ferroelectric materials such as lithium niobate ($LiNbO_3$) is known. Inorganic ferroelectric materials have limitations on the high-speed performance, size reduction and integration of optical control elements and also have a problem in that hybridization with semiconductor materials advantageous in size reduction and integration is difficult.

On the other hand, organic electro-optic polymers (organic EO polymers) exhibit a large electro-optic effect compared with inorganic ferroelectric materials. In addition, organic EO polymers are capable of high-speed operation and are easy to be hybridized with semiconductors, ferroelectric materials and their microstructures. As described above, organic EO polymers are capable of size reduction and integration in addition to high-speed performance and power saving and are thus expected as materials responsible for next-generation optical communication.

CITATION LIST

NON PATENT LITERATURE

NPL 1: "Organic Material For Nonlinear Optics", The Chemical Society of Japan, Kikan kagaku sosetsu No. 15 (1992)
NPL 2: "Organic Nonlinear Optical Materials", Ch. Bosshard, et al., Gordon and Breach Publishers (1995)
NPL 3: "Recent Advance on Photonic Organic Materials for Information and Telecommunication Applications", supervised by Toshikuni Kaino, CMC Publishing Co., Ltd. (2007)
NPL 4: "Organic Electro-Optics and Photonics", Larry R. Dalton, et. al., Cambridge University Press (2015)

SUMMARY OF INVENTION

TECHNICAL PROBLEM

Organic EO polymers have been thus far developed under the assumption of being used in a C band, which is a long-distance communication wavelength band. In recent years, there has been a demand for development of an optical control element useful (highly efficient) in shorter wavelength bands than the C band.

The present invention provides a novel polymer that can be suitably used for an optical control element useful in shorter wavelength bands than the C band as an electro-optic material, and an optical control element.

SOLUTION TO PROBLEM

The present invention provides a polymer that will be described below.

[1] A polymer represented by the formula (1):

[Chem. 1]

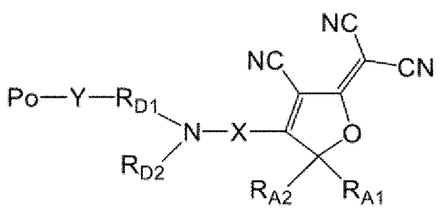

(1)

[in the formula (1),

$R_{A1}$ and $R_{A2}$ are each independently an alkyl group having 1 to 10 carbon atoms, an aryl group having 6 to 12 carbon atoms, or an alkyl aryl group having 7 to 15 carbon atoms; hydrogen atoms contained in the alkyl group, the aryl group, and the alkyl aryl group are optionally substituted with halogen atoms; and $R_{A1}$ and $R_{A2}$ are optionally linked to each other to form a 3- to 12-membered saturated alicyclic structure together with a carbon atom to which they are bonded,
X represents a phenylene group, an ethylene group, or a phenylenevinylene group,
$R_{D1}$ represents an alkanediyl group having 1 to 10 carbon atoms; $R_{D2}$ represents an alkyl group having 1 to 10 carbon atoms; and any carbon atoms contained in $R_{D1}$ and $R_{D2}$ are optionally linked to each other to form a 3- to 12-membered saturated heterocyclic structure together with a nitrogen atom to which $R_{D1}$ and $R_{D2}$ are bonded,
Y represents a linking group, and
Po represents a polymer structure].

[2] The polymer according to [1], wherein

in the formula (1),
$R_{A1}$ represents an alkyl group having 1 to 10 carbon atoms,
$R_{A2}$ represents a group in which at least one hydrogen atom contained in a halogenated aryl group having 6 to 12 carbon atoms or an alkyl aryl group having 7 to 15 carbon atoms is substituted with a halogen atom, and
X represents a phenylenevinylene group.

[3] The polymer according to [1], wherein

in the formula (1),
$R_{A1}$ and $R_{A2}$ each independently represent an alkyl group having 1 to 10 carbon atoms; and $R_{A1}$ and $R_{A2}$ are optionally linked to each other to form a 3- to 12-membered saturated alicyclic structure together with a carbon atom to which they are bonded, and
X represents a phenylene group.

[4] The polymer according to any of [1] to [3], wherein Y in the formula (1) represents a urethane bond.
[5] The polymer according to any of [1] to [4], wherein Po in the formula (1) represents a (meth)acrylic polymer structure.
[6] An optical control element having an optical waveguide formed of the polymer according to any of [1] to [5].

## ADVANTAGEOUS EFFECT OF INVENTION

The polymer of the present invention can be suitably used for an optical control element useful in shorter wavelength bands than the C band as an electro-optic material.

## BRIEF DESCRIPTION OF DRAWINGS

Fig. 1 is a schematic view of a Mach-Zehnder interferometer type waveguide that can be provided in an optical control element.
Fig. 2 is a schematic view of an x-x' cross section in Fig. 1.
Fig. 3 is an image showing a cross section of a light input end face of an optical modulator obtained in a Comparative Example.
Fig. 4 is a graph showing time waveforms of optical modulation of the optical modulator obtained in the Comparative Example.
Fig. 5 is an image showing a cross section of a light input end face of an optical modulator obtained in an Example.
Fig. 6 is a graph showing time waveforms of optical modulation of the optical modulator obtained in the Example.

## DESCRIPTION OF EMBODIMENTS

Hereinafter, an embodiment of the present invention will be described, but the present invention is not limited to the following embodiment.

<Polymer>

The polymer of the present embodiment is a polymer represented by the formula (1) (hereinafter, referred to as "polymer (1)" in some cases).

[Chem. 2]

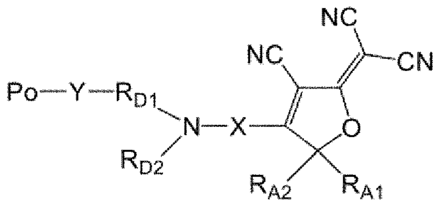

(1)

[In the formula (1),

$R_{A1}$ and $R_{A2}$ each independently represent an alkyl group having 1 to 10 carbon atoms, an aryl group having 6 to 12 carbon atoms, or an alkyl aryl group having 7 to 15 carbon atoms, hydrogen atoms contained in the alkyl group, the aryl group, and the alkyl aryl group are optionally substituted with halogen atoms, and $R_{A1}$ and $R_{A2}$ are optionally linked to each other to form a 3- to 12-membered saturated alicyclic structure together with a carbon atom to which they are bonded.

X represents a phenylene group, an ethylene group, or a phenylenevinylene group.

$R_{D1}$ represents an alkanediyl group having 1 to 10 carbon atoms, $R_{D2}$ represents an alkyl group having 1 to 10 carbon atoms, $R_{D2}$ is optionally bonded to Po, and any carbon atoms contained in $R_{D1}$ and $R_{D2}$ are optionally linked to each other to form a 3-to 12-membered saturated heterocyclic structure together with a nitrogen atom to which $R_{D1}$ and $R_{D2}$ are bonded.

Y represents a linking group.

Po represents a polymer structure.]

The structure on the right side of Y in the formula (1) is a structure contained in an electro-optic molecule (hereinafter, referred to as "EO molecular structure" in some cases). The EO molecular structure has a structure in which a structure on the right side of X in the formula (1) (hereinafter, referred to as "acceptor structure" in some cases), and a structure represented by -$R_{D1}$($R_{D2}$)N- positioned between X and Y (hereinafter, referred to as "doner structure" in some cases) are linked through X. The doner structure of the EO molecular structure is linked to a polymer structure via Y.

Examples of the alkyl group having 1 to 10 carbon atoms represented by $R_{A1}$ and $R_{A2}$ include a methyl group, an ethyl group, a normal propyl group, an isopropyl group, a normal butyl group, a tert-butyl group, a normal pentyl group, a normal hexyl group, a normal heptyl group, and a 2-ethylhexyl group. The alkyl group is preferably an alkyl group having 1 to 5 carbon atoms. The alkyl group may be linear or branched, and is preferably linear. The alkyl group represented by $R_{A1}$ and $R_{A2}$ may be an alkyl group having 1 to 5 carbon atoms, and is preferably a methyl group.

Examples of the aryl group having 6 to 12 carbon atoms represented by $R_{A1}$ and $R_{A2}$ include a phenyl group, a 1-naphthyl group, a 2-naphthyl group, and a biphenyl group, and a phenyl group is preferable.

Examples of the alkyl aryl group having 7 to 15 carbon atoms represented by $R_{A1}$ and $R_{A2}$ include a group in which at least one hydrogen atom contained in the aryl group represented by $R_{A1}$ and $R_{A2}$ is substituted with an alkyl group. Examples of the substituted alkyl group include the alkyl groups described above, and an alkyl group having 1 to 5 carbon atoms is preferable.

Examples of the halogen atom with which at least one hydrogen atom contained in the alkyl group, the aryl group, and the alkyl aryl group represented by $R_{A1}$ and $R_{A2}$ is optionally substituted include a fluorine atom, a chlorine atom, a bromine atom, and an iodine atom. The number of the hydrogen atoms optionally substituted with halogen atoms is only required to be one or more, and when two or more hydrogen atoms are substituted with halogen atoms, the halogen atoms may be the same or different from one another. The hydrogen atom contained in the alkyl aryl group may be a hydrogen atom contained in the alkyl group of the alkyl aryl group, or may be a hydrogen atom contained in the aromatic ring.

Examples of the halogenated alkyl group in which at least one hydrogen atom contained in the alkyl group is substituted with a halogen atom include a fluoromethyl group, a difluoromethyl group, a trifluoromethyl group, a 2-fluoroethyl group, a 1,2-difluoroethyl group, a chloromethyl group, a 2-chloroethyl group, a 1,2-dichloroethyl group, a bromomethyl group, a 2-bromoethyl group, a 1-bromopropyl group, a 2-bromopropyl group, a 3-bromopropyl group, and a iodomethyl group, and a trifluoromethyl group is preferable.

As the halogenated aryl group in which at least one hydrogen atom contained in the aryl group is substituted with a halogen atom, a halogenated phenyl group is preferable. Examples of the halogenated phenyl group include a fluorophenyl group, a difluorophenyl group, a trifluorophenyl group, a pentafluorophenyl group, a chlorophenyl group, a dichlorophenyl group, a bromophenyl group, and a chlorofluorophenyl group.

Examples of the group in which at least one hydrogen atom contained in the alkyl aryl group is substituted with a halogen atom include a trifluoromethylphenyl group and a chloro(trifluoromethyl)phenyl group.

$R_{A1}$ and $R_{A2}$ may have the same structure as each other or different structures from each other. When $R_{A1}$ and $R_{A2}$ have the same structure as each other, $R_{A1}$ and $R_{A2}$ preferably represent an alkyl group having 1 to 10 carbon atoms, and more preferably represent a methyl group. When $R_{A1}$ and $R_{A2}$ have different structures from each other, $R_{A1}$ and $R_{A2}$ preferably represent the following [a1] or [a2].

[a1] $R_{A1}$ represents an alkyl group having 1 to 10 carbon atoms, and $R_{A2}$ represents a halogenated aryl group having 6 to 12 carbon atoms, or a group in which at least one hydrogen atom contained in an alkyl aryl group having 7 to 15 carbon atoms is substituted with a halogen atom.

[a2] $R_{A1}$ represents a halogenated alkyl group having 1 to 10 carbon atoms, and $R_{A2}$ represents an aryl group having 6 to 12 carbon atoms.

In the 3- to 12-membered saturated alicyclic structure formed of $R_{A1}$ and $R_{A2}$ linked to each other together with a carbon atom to which they are bonded, the carbon atom at the terminal of $R_{A1}$ and the carbon atom at the terminal of $R_{A2}$ are preferably linked. Examples of the saturated alicyclic structure include a cyclopropyl group, a cyclobutyl group, a cyclopentyl group, a cyclohexyl group, a cycloheptyl group, a cyclooctyl group, a cyclononyl group, and a cyclodecyl group, and a cyclopentyl group or a cyclohexyl group is preferable.

Examples of the acceptor structure in the formula (1) include the structures shown below. In the following formulae, * 1 represents a bond to X.

[Chem. 3]

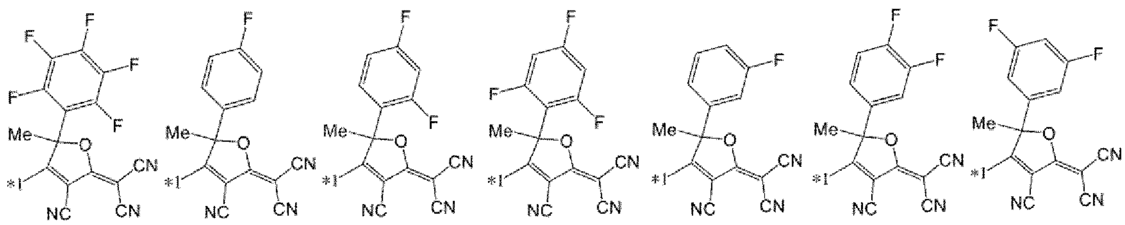

(a-1) (a-2) (a-3) (a-4) (a-5) (a-6) (a-7)

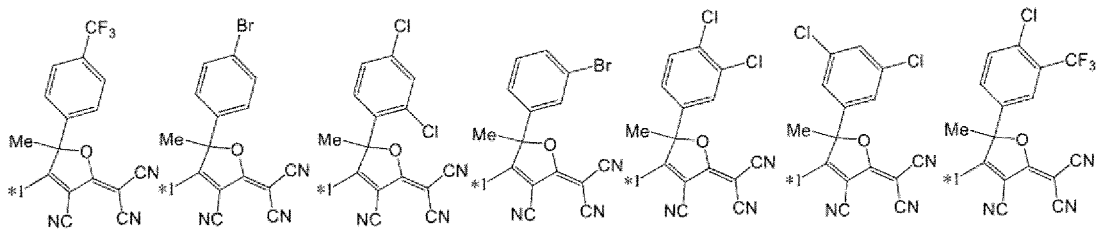

(a-8) (a-9) (a-10) (a-11) (a-12) (a-13) (a-14)

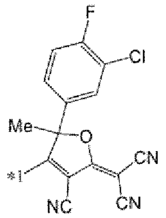
(a-15)
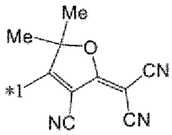
(a-16)
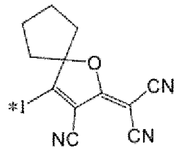
(a-17)
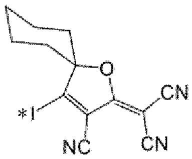
(a-18)
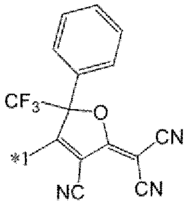
(a-19)
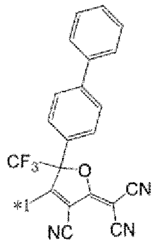
(a-20)

Examples of the alkanediyl group having 1 to 10 carbon atoms represented by $R_{D1}$ include a methylene group, an ethylene group, a propane-1,3-diyl group, a butane-1,3-diyl group, a butane-1,4-diyl group, a pentane-1,5-diyl group, a hexane-1,6-diyl group, a heptane-1,7-diyl group, an octane-1,8-diyl group, and a decane-1,10-diyl group. The alkanediyl group is preferably an alkanediyl group having 1 to 5 carbon atoms. The alkanediyl group may be linear or branched, and is preferably linear.

Examples of the alkyl group having 1 to 10 carbon atoms represented by $R_{D2}$ include alkyl groups described as the alkyl group having 1 to 10 carbon atoms represented by $R_{A1}$ and $R_{A2}$. The alkyl group is preferably an alkyl group having 1 to 5 carbon atoms. The alkyl group may be linear or branched, and is preferably linear.

The 3- to 12-membered saturated heterocyclic structure formed of $R_{D1}$ and $R_{D2}$ linked to each other together with a nitrogen atom is only required to be a 3- to 12-membered saturated heterocyclic structure formed of any carbon atom contained in $R_{D1}$ and any carbon atom contained in $R_{D2}$ linked to each other, preferably a 3- to 12-membered saturated heterocyclic structure formed of any carbon atom contained in $R_{D1}$ and a carbon atom at the terminal of $R_{D2}$ linked to each other, and more preferably a 6-membered saturated heterocyclic structure formed of any carbon atom contained in $R_{D1}$ and a carbon atom at the terminal of $R_{D2}$ linked to each other. Although a heteroatom other than the above-described nitrogen atom may be contained in the saturated heterocyclic structure, the heteroatom contained in the saturated heterocyclic structure is preferably one. Examples of the saturated heterocyclic structure include groups obtained by removing one hydrogen atom from the cyclic structure moiety of a saturated heterocyclic group such as an aziridine group, a pyrrolidine group, a piperidine group, or an azocane group; and groups having an alkanediyl group on an atom (preferably a carbon atom) that forms a cyclic skeleton of a saturated heterocyclic group such as an aziridine group, a pyrrolidine group, a piperidine group, or an azocane group. The number of carbon atoms of the alkanediyl group is preferably 1 to 5, and may be 1 to 3.

Examples of the doner structure in the formula (1) include the structures shown below. In the following formulae, *2 represents a bond to Y.

[Chem. 4]

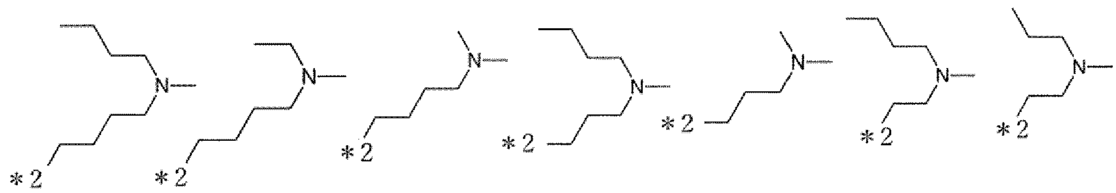
(d-1) (d-2) (d-3) (d-4) (d-5) (d-6) (d-7)

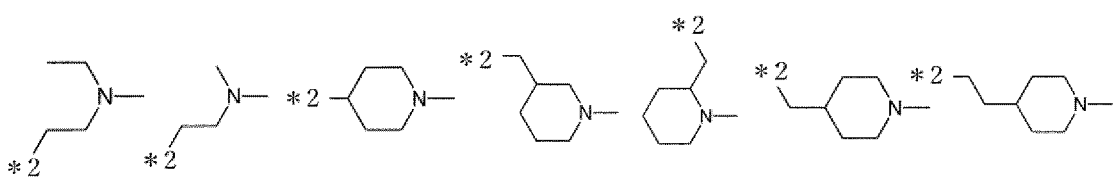
(d-8) (d-9) (d-10) (d-11) (d-12) (d-13) (d-14)

In the phenylenevinylene group represented by X, it is preferable that the phenylene group side be linked to the nitrogen atom in the formula (1) and the polymer (1) forms the structure of $-Y-R_{D1}(R_{D2})N-C_6H_4-(CH)_2-$.

In the polymer (1), when $R_{D1}$ represents the above-described alkanediyl group, $R_{D2}$ represents the above-described alkyl group, and $R_{D1}$ and $R_{D2}$ optionally form the above-described saturated heterocyclic structure, $R_{A1}$, $R_{A2}$, and X are preferably any of the following [e1] to [e3].

[e1] $R_{A1}$ represents an alkyl group having 1 to 10 carbon atoms, $R_{A2}$ represents a halogenated aryl group having 6 to 12 carbon atoms, or a group in which at least one hydrogen atom contained in an alkyl aryl group having 7 to 15 carbon atoms is substituted with a halogen atom, and X represents a phenylenevinylene group.

[e2] $R_{A1}$ and $R_{A2}$ each independently represent an alkyl group having 1 to 10 carbon atoms, $R_{A1}$ and $R_{A2}$ are optionally linked to each other to form a 3- to 12-membered saturated alicyclic structure together with a carbon atom to which they are bonded, and X represents a phenylene group.

[e3] (i) $R_{A1}$ and $R_{A2}$ each independently represent an alkyl group having 1 to 10 carbon atoms, (ii) $R_{A1}$ represents an alkyl group having 1 to 10 carbon atoms, and $R_{A2}$ represents a halogenated aryl group having 6 to 12 carbon atoms, or (iii) $R_{A1}$ represents a halogenated alkyl group having 1 to 10 carbon atoms, $R_{A2}$ represents an aryl group having 6 to 12 carbon atoms, and X represents an ethylene group.

Examples of the EO molecular structure of the polymer (1) include the structures shown in structures (1) to (9) shown in Table 1. In Table 1, the structure (1) represents that, in the formula (1), the doner structure is any of the structures represented by the above-described formula (d-1) to formula (d-14), X is a structure represented by *3-$C_6H_4$-$(CH)_2$-, and the acceptor structure is a structure represented by the above-described formula (a-19) or formula (a-20). *3 in the formulae represented by X represents a bond to the N atom.

[Table 1]

| Structure | Doner structure | -X- | Acceptor structure |
|---|---|---|---|
| (1) | Any of (d-1) to (d-14) | *3-$C_6H_4$-$(CH)_2$- | (a-19) or (a-20) |
| (2) | Any of (d-1) to (d-14) | *3-$C_6H_4$-$(CH)_2$- | Any of (a-1) to (a-15) |
| (3) | Any of (d-1) to (d-14) | *3-$C_6H_4$-$(CH)_2$- | Any of (a-16) to (a-18) |
| (4) | Any of (d-1) to (d-14) | *3-$C_6H_4$- | (a-19) or (a-20) |
| (5) | Any of (d-1) to (d-14) | *3-$C_6H_4$- | Any of (a-1) to (a-15) |
| (6) | Any of (d-1) to (d-14) | *3-$C_6H_4$- | Any of (a-16) to (a-18) |
| (7) | Any of (d-1) to (d-14) | *3-$(CH)_2$- | (a-19) or (a-20) |
| (8) | Any of (d-1) to (d-14) | *3-$(CH)_2$- | Any of (a-1) to (a-15) |
| (9) | Any of (d-1) to (d-14) | *3-$(CH)_2$- | Any of (a-16) to (a-18) |

The linking group represented by Y is a group which links the doner structure of the EO molecular structure and a polymer structure represented by Po. Examples of the linking group include a (thio)urethane bond, a (thio)urea bond, and a (thio)amide bond. (Thio)urethane means at least one selected from urethane and thiourethane. The same applies to (thio)urea, (thio)amide, and the like. The linking group is preferably a urethane bond. When Y represents a urethane bond, the structure represented by Po-Y-$R_{D1}$- of the formula (1) is preferably Po-HNC(O)O-$R_{D1}$-.

Examples of the polymer structure represented by Po include structures such as a (meth)acrylic polymer structure such as PMMA, a polyimide structure, a polycarbonate structure, an olefin polymer structure, a cycloolefin polymer structure, a vinyl polymer structure, a polyester structure, a polyalkylsiloxane structure, and an epoxy resin structure. The polymer structure may be a homopolymer structure, or a copolymer structure obtained by polymerizing two or more monomers. (Meth)acrylic means at least one selected from acrylic and methacrylic. The same applies to (meth)acrylate and the like.

The polymer structure represented by Po preferably has a (meth)acrylic polymer structure, and more preferably has a (meth)acrylic polymer structure having one or more selected from the group consisting of a (thio)urethane bond, an alkyl group, a monocyclic or polycyclic saturated cycloaliphatic hydrocarbon group, and an iso(thio)cyanato group, at a side chain. Examples of the alkyl group include alkyl groups described as the alkyl group having 1 to 10 carbon atoms represented by $R_{A1}$ and $R_{A2}$. The monocyclic or polycyclic saturated cycloaliphatic hydrocarbon group is preferably a saturated cycloaliphatic hydrocarbon group having 3 to 12 carbon atoms, and examples thereof include a cyclopropyl group, a cyclobutyl group, a cyclopentyl group, a cyclohexyl group, a t-butylcyclohexyl group, a cycloheptyl group, a cyclooctyl group, an adamantyl group, and a dicyclopentanyl group. The (meth)acrylic polymer structure refers to a repeating unit formed by polymerizing (meth)acrylic acid esters as the monomer. The (meth)acrylic acid ester used to form the (meth)acrylic polymer structure may be one or two or more kinds.

Examples of the monomer component used to obtain the (meth)acrylic polymer structure include one or two

or more selected from the group consisting of alkyl (meth)acrylates such as methyl (meth)acrylate; (meth)acrylates having an iso(thio)cyanato group, such as 2-(isocyanatoethyl) methacrylate and 2-(2-methacryloyloxyethyloxy)ethyl isocyanate; and (meth)acrylates having a polycyclic saturated cycloaliphatic hydrocarbon group, such as adamantyl methacrylate, dicyclopentanyl methacrylate, and isobornyl methacrylate.

Examples of the (meth)acrylic polymer structure include the structures shown below.

[Chem. 5]

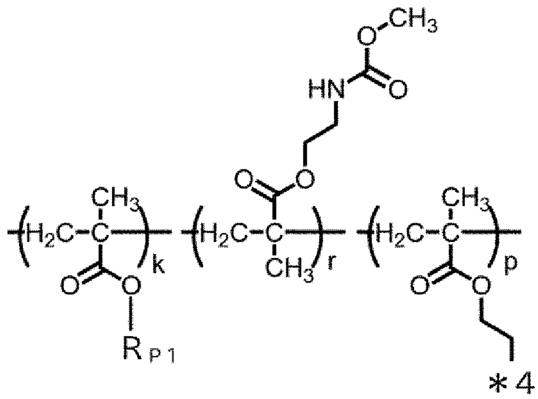

[In the formula, $R_{P1}$ represents an alkyl group, or a monocyclic or polycyclic saturated cycloaliphatic hydrocarbon group, k, p, and r represent an integer of 1 or more, and *4 represents a bond to Y.]

The polymer (1) is a polymer that exhibits a second-order nonlinear optical effect. The polymer (1) preferably has a figure of merit FOM1 of 1.2 $(V\cdot cm)^{-1}$ or more, and/or preferably has a figure of merit FOM2 of 0.20 $(V\cdot dB)^{-1}$ or more at a wavelength of 1259 nm or shorter which is a shorter wavelength band than the C band. The figures of merit FOM1 and FOM2 are respectively a value calculated by the following formulae (I) and (II). In the present specification, the figures of merit FOM1 and FOM2 of the specific optical control element can be determined using inhomogeneous broadening analysis (Gaussian distribution formula) as described in the Examples to be described below.

[Math 1]

$$FOM1 = \frac{n^3 r}{\lambda^2} \qquad (I)$$

$$FOM2 = \frac{n^3 r}{\alpha \lambda^2} \qquad (II)$$

The wavelength at which the figure of merit FOM1 of the polymer (1) is 1.2 $(V\cdot cm)^{-1}$ or more, and/or the figure of merit FOM2 is 0.20 $(V\cdot dB)^{-1}$ or more may be 1100 nm or shorter, may be 1000 nm or shorter, may be 900 nm or shorter, may be 800 nm or shorter, may be 680 nm or shorter, and may be 650 nm or shorter, and is normally 200 nm or longer, may be 300 nm or longer, may be 400 nm or longer, and may be 500 nm or longer.

The figure of merit FOM1 of the polymer (1) may be 1.4 $(V\cdot cm)^{-1}$ or more, may be 1.5 $(V\cdot cm)^{-1}$ or more, may be 1.8 $(V\cdot cm)^{-1}$ or more, and is normally 48 $(V\cdot cm)^{-1}$ or less at any wavelength range of the above-described wavelength ranges. The figure of merit FOM2 of the polymer (1) may be 0.25 $(V\cdot dB)^{-1}$ or more, may be 0.30 $(V\cdot dB)^{-1}$ or more, and is normally 8 $(V\cdot dB)^{-1}$ or less at any wavelength range of the above-described wavelength ranges.

The polymer (1) can be obtained by, for example, reacting a polymer (Po1) containing a polymer structure of the polymer represented by the formula (1) and a reactive group, with a compound (EO1) containing an EO molecular structure of the polymer represented by the formula (1) and a reactive group.

[Chem. 6]

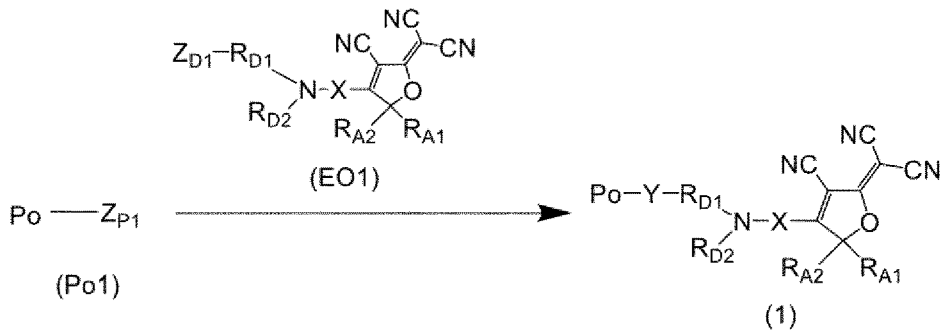

(1)

[In the formula, $R_{A1}$, $R_{A2}$, X, $R_{D1}$, $R_{D2}$, and Y represent the same meanings as above, and $Z_{P1}$ and $Z_{D1}$ each independently represent a reactive group.]

$Z_{P1}$ which represents the reactive group in the polymer (Po1) and $Z_{D1}$ which represents the reactive group in the compound (EO1) are functional groups that can form the linking group represented by Y in the formula (1) by reacting these two reactive groups. $Z_{P1}$ and $Z_{D1}$ may be each independently selected from the group consisting of an iso(thio)cyanato group, a hydroxy group, a thiol group, an amino group, a carboxyl group, and an acid anhydride group. It is preferable that one of $Z_{P1}$ and $Z_{D1}$ be an iso(thio)cyanato group and the other be a hydroxy group, and it is more preferable that $Z_{P1}$ be an isocyanato group and $Z_{D1}$ be a hydroxy group. A plurality of reactive groups $Z_{P1}$ are normally contained in the polymer (Po1). In the polymer (1), the compound (EO1) is bonded to a part of the reactive group $Z_{P1}$ contained in the polymer (Po1), and the part may remain as the reactive group $Z_{P1}$.

The compound (EO1) may be obtained by, for example, reacting a compound (DX1) containing the doner structure and the structure of X, with a compound (A1) containing an acceptor structure, or may be obtained by reacting a compound (AX2) containing the structure of X and the acceptor structure with a compound (D2) containing the doner structure.

[Chem. 7]

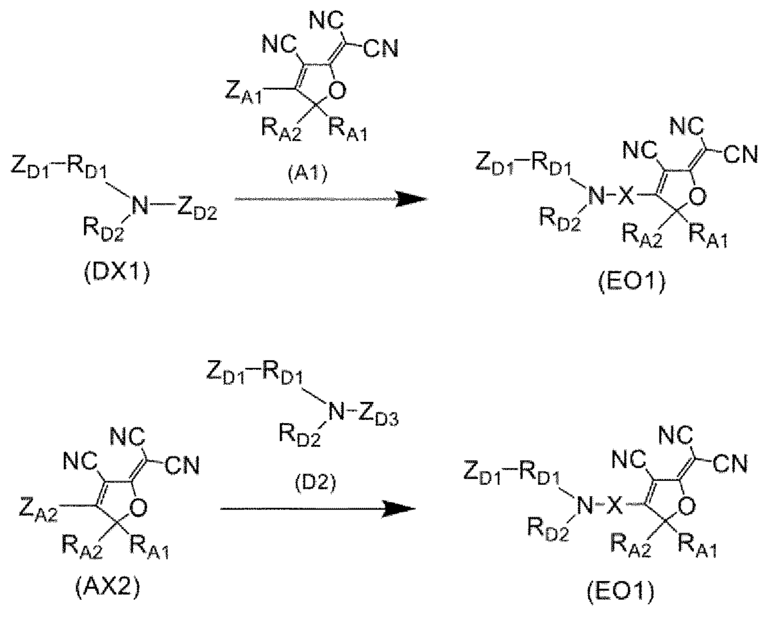

[In the formulae, $R_{A1}$, $R_{A2}$, X, $R_{D1}$, $R_{D2}$, and $Z_{D1}$ represent the same meanings as above, and $Z_{D2}$, $Z_{D3}$, $Z_{A1}$, and $Z_{A2}$ each independently represent a reactive group.]

$Z_{D2}$ which represents a reactive group in the compound (DX1) and $Z_{A1}$ which represents a reactive group in the compound (A1) are not particularly limited, as long as they are functional groups capable of forming a linking group represented by X in the compound (EO 1) by reacting these two reactive groups. $Z_{A2}$ which represents a reactive group

in the compound (AX2) and $Z_{D3}$ which represents a reactive group in the compound (D2) are not particularly limited, as long as they are functional groups capable of forming a linking group represented by X in the compound (EO1) by reacting these two reactive groups.

<Optical Control Element>

The polymer (1) can be used as an electro-optic material applicable to the optical control element. The optical control element of the present embodiment can have, for example, an optical waveguide formed of the polymer (1). Examples of the optical control element include optical modulators, optical switches, optical transceivers, optical phased arrays, LiDAR, smart glasses, optical interconnects, optoelectronic circuits, wavelength converters, electric field sensors, and THz wave generators/detectors.

The optical control element can be suitably used in shorter wavelength bands than the C band. The wavelength band in which the optical control element is used is normally 1259 nm or shorter, may be 1100 nm or shorter, may be 1000 nm or shorter, may be 900 nm or shorter, may be 800 nm or shorter, may be 680 nm or shorter, and may be 650 nm or shorter, and is normally 200 nm or longer, may be 300 nm or longer, may be 400 nm or longer, and may be 500 nm or longer. For example, among the optical control elements using the polymer (1) having an EO molecular structure of the structures (1) to (9) shown in the above-described Table 1, it is considered that the optical control element in which the structure of the EO molecule contained in the polymer (1) is the structure (1) can be suitably used at the longest wavelength side in the above-described wavelength bands. Following this, the suitably usable wavelength band moves to the shorter wavelength side in the order of the structure (2), the structure (3), the structure (4), the structure (5), the structure (6), the structure (7), the structure (8), and the structure (9), and it is considered that the optical control element in which the structure of the EO molecule contained in the polymer (1) is the structure (9) can be suitably used at the shortest wavelength side in the above-described wavelength bands. For example, the optical control element using the polymer (1) having the EO molecular structure of the structure (2) shown in the above-described Table 1 can be suitably used in a wavelength band of 780 nm or longer and 1000 nm or shorter. The optical control element using the polymer (1) having the EO molecular structure of the structure (6) shown in the above-described Table 1 can be suitably used in a wavelength band of 630 nm or longer and 700 nm or shorter. It is considered that the optical control element using the polymer (1) having the EO molecular structure of the structure (9) shown in the above-described Table 1 can be suitably used in a wavelength band of 530 nm or longer and 600 nm or shorter.

Fig. 1 is a schematic view of an MZ type waveguide that can be provided in an optical control element. Fig. 2 is a schematic view of an x-x' cross section in Fig. 1. In the optical control element, for example, as shown in Fig. 1, an optical waveguide that is provided in the optical control element can include a single-arm-driven Mach-Zehnder interferometer type waveguide (hereinafter, referred to as "MZ type waveguide" in some cases). In the MZ type waveguide, light input from the left side in Fig. 1 propagates through the optical waveguide. As shown in Fig. 2, usually, the optical waveguide is composed of a core 11 where light mainly propagates and a clad 12 provided on the circumference of core 11, and core 11 is formed of the polymer (1). Light input to an optical waveguide of the MZ type waveguide propagates into arm portions 10a and 10b, which are two branched portions as shown in Fig. 1, then, converges again to be interfered and is output. In one of two arm portions 10a and 10b, an upper electrode 15 for performing phase modulation is disposed on clad 12. In the present specification, phase modulation refers to shifting of the phase of input light. Phase modulation in the MZ type waveguide refers to shifting of the phase of light that propagates in one of arm portion 10a, and the phase can be shifted by applying an electric field with upper electrode 15 disposed on arm portion 10a.

In the optical control element, when a half-wave voltage (a voltage when the intensity of output light becomes zero) in the MZ type waveguide is indicated by $V_\pi$ [V] and the length of a phase modulation region in the MZ type waveguide is indicated by L (Fig. 1), a figure for evaluating the high-speed performance is expressed as the product of the half-wave voltage $V_\pi$ and the length L (formula (i-1)). The phase modulation region is a region where the above-described phase modulation is performed and, in the MZ type waveguide shown in Fig. 1, is a region where upper electrode 15 on one arm portion 10a is disposed. Therefore, the length L of the phase modulation region becomes the length of upper electrode 15 (a length in the light travel direction). In addition, in the optical control element, when the half-wave voltage is indicated by $V_\pi$ [V] and the propagation loss of the phase modulation region is indicated by Loss [dB], a figure for evaluating the power saving is expressed as the product of the half-wave voltage $V_\pi$ and the propagation loss (formula (ii-1)).

[Math 2]

$$V_{\pi} L = \frac{\lambda}{n^3 r} \frac{d}{\Gamma} \qquad \text{(i-1)}$$

$$V_{\pi} Loss = V_{\pi} \alpha L = \frac{\lambda}{n^3 r} \frac{d}{\Gamma} \alpha \qquad \text{(ii-1)}$$

[In the formula, $\lambda$ is the wavelength, n is the refractive index, r is the electro-optic coefficient, d is the distance between electrodes (the distance between upper electrode 15 and a grounding surface (lower electrode) 16) in the phase modulation region, $\Gamma$ is an overlap integral between the electric field of light and an applied electric field, and $\alpha$ is the propagation loss per unit length.]

As the value of $V_{\pi}L$ in the formula (i-1) and the value of $V_{\pi}Loss$ in the formula (ii-1) decrease, the optical control element becomes superior in terms of high-speed performance and power saving. Therefore, in order to obtain an optical control element having excellent high-speed performance, it is preferable to decrease the distance d in the formula (i-1). In addition, in order to obtain an optical control element having excellent power saving, it is preferable to decrease the distance d (Fig. 1 and Fig. 2) in the formula (ii-1).

The shape (structure) of the optical waveguide may be a channel type waveguide as shown in Fig. 2 or may be a ridge type waveguide, a reverse ridge type waveguide, a photonic crystal waveguide or the like.

Clad 12 is not particularly limited as long as the clad is formed of a material having a refractive index lower than the refractive index of core 11, and a well-known material can be used. Examples of the material that configures clad 12 include glass such as quartz glass and multi-component glass, a fluororesin, a silicone resin, an organic silica composite (organic silica composite containing an organic component bonding to inorganic silica), a (meth)acrylic polymer such as PMMA, a polyimide, a polycarbonate, an olefin-based polymer, a cycloolefin-based polymer and the like.

In a case where upper electrode 15 and lower electrode 16 are provided in the phase modulation region as shown in Fig. 1 and Fig. 2, upper electrode 15 and lower electrode 16 may be formed of a well-known conductive material such as a metallic material.

The optical control element may be an MZ type optical modulator in which a Mach-Zehnder (MZ) interferometer is configured using an optical waveguide as shown in Fig. 1 or may be a nest type MZ type optical modulator in which an MZ interferometer is further integrated on two branch road of another MZ interferometer, a single phase modulator having no branched structures, an optical phased array composed of a plurality of branches and a phase modulator or the like.

Examples

Hereinafter, the present invention will be more specifically described by showing Examples, but the present invention is not limited by these examples.

[Comparative Example 1]

An EO polymer (EO-1) in which a compound expressed by the formula (E-1) (hereinafter, referred to as "compound (E-1)" in some cases) was bonded to a base polymer was obtained by the following procedure.

(Preparation of Compound (E-1))

The compound (E-1) was prepared by a procedure described in Example 57 of WO 2011/024774.

[Chem. 8]

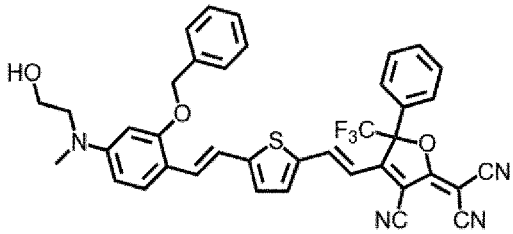

(E－1)

(Synthesis of Base Polymer (A-1))

24.15 g (241.2 mmol) of methyl methacrylate (MMA), 10.65 g (68.64 mmol) of 2-(isocyanatoethyl) methacrylate (MOI) and 1.53 g (9.32 mmol) of azobisisobutyronitrile (AIBN) were dissolved in 57 mL of dehydrated toluene, argon was encapsulated, and then the solution was stirred in an oil bath at 60°C for two hours. The reaction mixture was cooled to room temperature and then added dropwise to 1420 mL of dehydrated diisopropyl ether (IPE) to filter the precipitate. The precipitate was washed with dehydrated IPE and dried under reduced pressure at 70°C, thereby obtaining 24.1 g of a base polymer (A-1).

(Derivatization of Base Polymer (A-1) (Methyl Carbamate Derivative))

Under Ar gas, 7.0 g of the base polymer (A-1) was dissolved in 245 mL of dehydrated tetrahydrofuran, 15 mL of dehydrated methanol and 280 μL of dibutyltin dilaurate (DBTDL) were added, and the solution was stirred in an oil bath at 60°C for two hours. The reaction mixture was cooled, then, poured into 2.8 L of diisopropyl ether (IPE) and stirred. A precipitated powder was filtered, washed with IPE and dried under reduced pressure at 70°C, thereby obtaining the derivative of the base polymer (A-1).

Regarding the obtained derivative, as a result of measuring 10 mg of a measurement specimen and a reference specimen using a differential scanning calorimetry measuring instrument (Rigaku Thermo plus DSC 8230, manufactured by Rigaku Corporation) under conditions of an Al empty container, a nitrogen atmosphere and a rate of temperature increase of 10 °C/minute, the glass transition temperature Tg was 97 °C. In addition, as a result of obtaining the molecular weights by GPC in which Alliance e2695 (manufactured by Nihon Waters K.K.) was used (column: Shodex GPC KF-804L (8 mmϕ × 300 mm), developing solvent: THF, column temperature: 40°C), the weight-average molecular weight Mw was 76300, and the number-average molecular weight Mn was 35500.

(Manufacturing of EO Polymer (EO-1))

4.70 g of the base polymer (A-1) obtained above was dissolved in 190 mL of dehydrated tetrahydrofuran (THF). 2.10 g (3.04 mmol) of the compound (E-1) and 150 μL of dibutyltin dilaurate (DBTDL) were added to this, and the solution was stirred in an oil bath at 60 °C for two hours. Next, 10 mL of dehydrated methanol and 60 μL of DBTDL were added and stirred at 60 °C for 30 minutes. The reaction mixture was cooled, then, poured into 1500 mL of diisopropyl ether (IPE) and stirred. A precipitated powder was filtered, washed with IPE (1 L) and dried under reduced pressure at 70 °C. 2.83 g of the EO polymer (EO-1) was obtained as a black powder (glass transition temperature Tg: 131 °C).

[Examples 1 and 2]

EO polymers (EO-4) and (EO-5) in which compounds expressed by the following formula (E-4) and formula (E-5) (hereinafter, referred to as "compound (E-4)" or the like in some cases) were bonded to the base polymer were obtained by the following procedure.

(Preparation of Compound (E-4))

A compound (E-4) ((E)-2-(4-(4-(butyl(4-hydroxybutyl)amino)styryl)-3-cyano-5-methyl-5-(perfluorophenyl)furan-2(5H)-ylidene)malononitrile) was synthesized by the following procedure.

<Synthesis of 4-t-butyldiphenylsilyloxybutylbutylamine (E4-1)>

[Chem. 9]

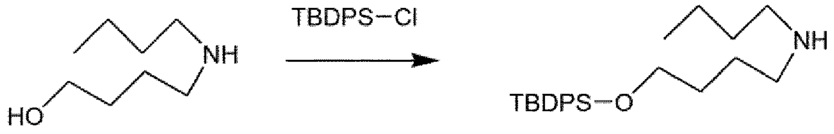


(E4-1)

Under an Ar atmosphere, a solution obtained by mixing 4-butylaminobutanol (22.2 g (0.156 mol)), triethylamine (37.3 g (0.366 mol)) and DryDMF (230 mL) was cooled with water, TBDPSCl (40.6 g (0.153 mol)) was added dropwise at 4 °C to 10 °C for 10 minutes, then, the temperature was raised up to room temperature, and the reaction mixture was stirred for three hours. The reaction mixture was dispersed in 1.2 L of water and extracted twice with ethyl acetate. The organic layer obtained by extraction was washed with water (twice) and saturated salt water and dried with anhydrous sodium sulfate, and the solvent was concentrated under reduced pressure, thereby obtaining 55.3 g of a compound expressed by the formula (E4-1) (hereinafter, referred to as "compound (E4-1)" in some cases) (yield: 92.3%).

<Synthesis of N-butyl-N-(4-(t-butyldiphenylsilyl)oxy)butylaniline (E4-2)>

[Chem. 10]

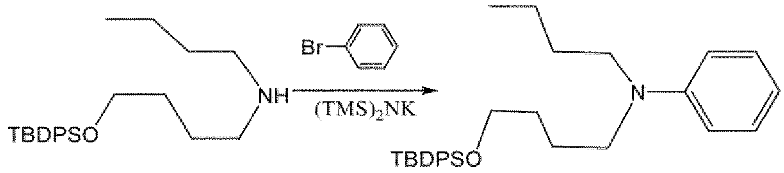


(E4-1) (E4-2)

Under an Ar atmosphere, (TMS)2NK (29.5 g (0.15 mol)) was added to the solution of the compound (E4-1) (55.3 g (0.14 mol)), bromobenzene (27.1 g (0.17 mol)) and dry toluene (470 mL), heated to 90 °C to 97 °C and stirred for three hours. This was cooled, then, washed with water (five times) and concentrated at 55 °C, thereby obtaining 70.1 g of a residue. This residue was purified by silica gel chromatography (740 g of silica gel, n-Hex, n-Hex/AcOEt:25/1), and 54.7 g of a compound expressed by the formula (E4-2) (hereinafter, referred to as "compound (E4-2)" in some cases) was obtained (yield: 83%).

<Synthesis of 4-(butyl(phenyl)amino)butan-1-ol (E4-3)>

[Chem. 11]

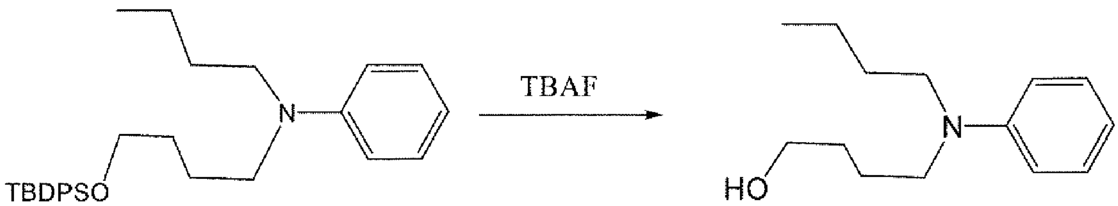


(E4-2) (E4-3)

Under an Ar atmosphere, 1.0M-TBAF-THF (151 mL (0.15 mol)) was added to the solution of the compound (E4-2) (54.7 g (0.12 mmol)) and THF (500 mL), stirred for one hour at 22 °C to 23 °C. The reaction mixture was dispersed in water (1 L) and extracted with ethyl acetate. The organic layer was washed with water (twice) and saturated salt water

in order and dried with anhydrous sodium sulfate, and the solvent was concentrated under reduced pressure, thereby obtaining 56.5 g of a residue. This residue was purified by silica gel chromatography (600 g of silica gel, n-Hex/AcOEt:3/1, 1/2), and 26.5 g of a compound expressed by the formula (E4-3) (hereinafter, referred to as "compound (E4-3)" in some cases) was obtained (yield: 100%).

<Synthesis of 4-(butyl(phenyl)amino)butylacetate (E4-4)>

[Chem. 12]

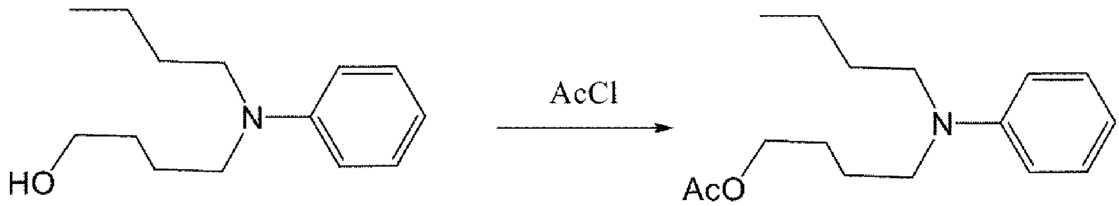


(E4-3) (E4-4)

Under an Ar atmosphere, the solution of the compound (E4-3) (26.5 g (0.12 mol)), triethylamine (24.2 g (0.24 mol)) and dry methylene chloride (200 mL) was cooled with icewater, and acetyl chloride (12.3 g (0.16 mol)) was added dropwise at 3 °C to 8 °C for 25 minutes. The reaction mixture was stirred at the same temperature for one hour, and then water (200 mL) was added dropwise to quench the reaction. The reaction mixture was separated, then, washed with water and saturated salt water and dried with anhydrous sodium sulfate, and the solvent was concentrated under reduced pressure, thereby obtaining 31 g of a residue. This residue was purified by silica gel chromatography (230 g of silica gel, n-Hex/AcOEt:10/1, 9/1), and 28.2 g of a compound expressed by the formula (E4-4) (hereinafter, referred to as "compound (E4-4)" in some cases) was obtained (yield: 89%).

<Synthesis of (N,N-4-acetoxybutylbutyl)-4-formylaminobenzene (E4-5)>

[Chem. 13]

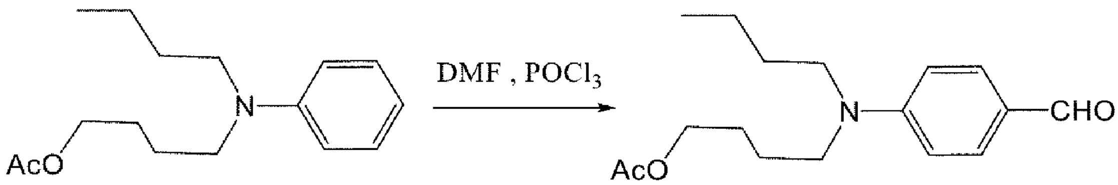


(E4-4) (E4-5)

Under an Ar atmosphere, phosphorus oxychloride (19.8 g (128.8 mol)) was added dropwise to ice-cooling anhydrous DMF (160 mL) at 5 °C to 7 °C for 15 minutes, then, the temperature was raised up to room temperature, and the reaction mixture was stirred for 30 minutes. Subsequently, the solution of the compound (E4-4) (28.2 g (107.1 mol)) and anhydrous DMF (85 mL) was added dropwise at 18 °C to 30 °C for 15 minutes, then, heated to 85 °C to 90 °C and stirred for 2.5 hours. After icewater cooling, 20% NaOAc water (240 mL) was added dropwise. This was stirred at room temperature for one hour and then extracted with ethyl acetate. The organic layer was washed with water twice and saturated salt water and dried with anhydrous sodium sulfate, and the solvent was concentrated under reduced pressure, thereby obtaining a residue (29.4 g). This residue was purified by silica gel chromatography (250 g of silica gel, n-Hex/AcOEt:5/1, 1/1), and 26.4 g of a compound expressed by the formula (E4-5) (hereinafter, referred to as "compound (E4-5)" in some cases) was obtained (yield: 85%).

<Synthesis of (N,N-4-hydroxybutylbutyl)-4-formylaminobenzene (E4-6)>

[Chem. 14]

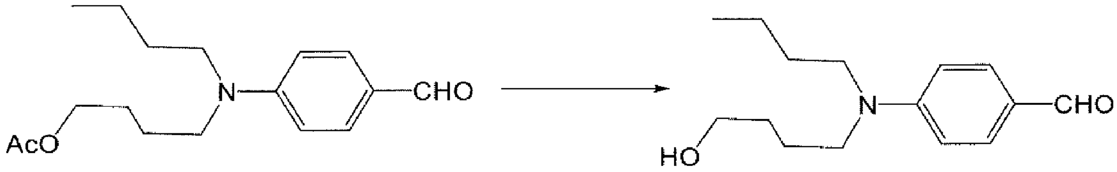

(E4-5)

(E4-6)

Under an Ar atmosphere, 2N-NaOH water (152 mL (304 mmol)) was added dropwise to the solution of the compound (E4-5) (26.4 g (90.6 mmol)) and EtOH (165 mL) for 30 minutes at 21 °C to 25 °C and then stirred for one hour. The reaction mixture was dispersed in water (1 L) and extracted with ethyl acetate. The organic layer was washed with water twice and saturated salt water in order and dried with anhydrous sodium sulfate, and the solvent was concentrated under reduced pressure, thereby obtaining a residue (21.8 g). This residue was purified by silica gel chromatography (220 g of silica gel, n-Hex/AcOEt:1/1→1/2), and 20.8 g of a compound expressed by the formula (E4-6) (hereinafter, referred to as "compound (E4-6)" in some cases) was obtained (yield: 92%).

<Preparation of 2-[3-cyano-4,5-dimethyl-5-(perfluorophenyl)furan-2(5H)-ylidene]malononitrile (E4-7)>

A compound expressed by a formula (E4-7) (hereinafter, referred to as "compound (E4-7)" in some cases) was prepared by the procedure described in Synthesis Example 1 of an EO molecule in WO 2019/151318.

<Synthesis of Compound (E-4)>

[Chem. 15]

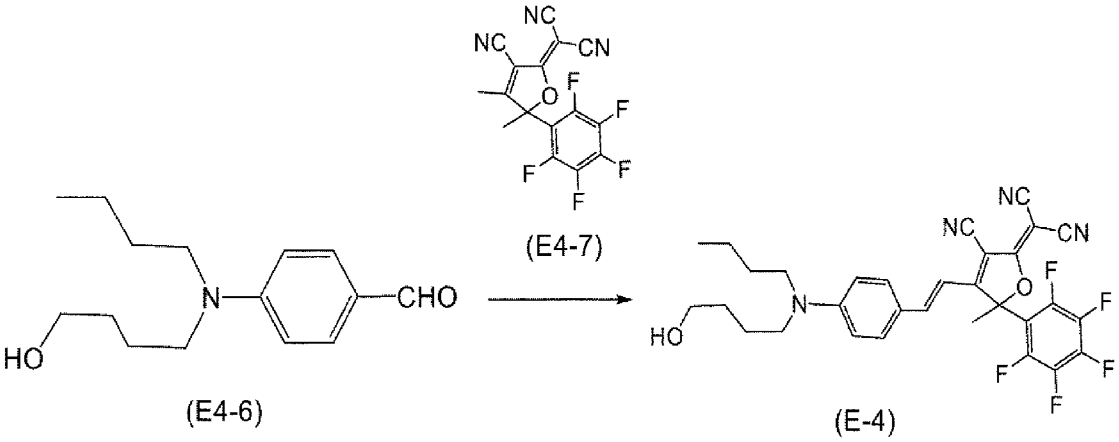

(E4-7)

(E4-6)

(E-4)

Under an Ar atmosphere, the solution of the compound (E4-6) (3.24 g (13.0 mmol)), the compound (E4-7) (3.51 g (10.0 mmol)) and EtOH (100 mL) was heated to 37 °C to 45 °C, stirred for five hours and then cooled with icewater. Precipitated crystals were filtered, washed with IPE and then dried under reduced pressure at 50 °C, thereby obtaining 3.51 g of the compound (E-4) (yield: 93%).

$^{1}$H-NMR analysis and $^{13}$C-NMR analysis of the compound (E-4) were performed.

$^{1}$H-NMR DMSO-d6

0.97 (t 3H), 1.34-1.42 (m 3H), 1.57-1.65 (m 4H), 1.70-1.77 (m 2H), 2.19 (s 3H), 3.36-3.43 (m 2H), 3.43-3.49 (m 2H), 3.71 (d 2H), 6.65 (d 2H), 6.68 (d 1H), 7.25 (d 1H), 7.41 (d 2H)

$^{13}$C-NMR analysis DMSO-d6

13.67, 19.40, 23.72, 26.12, 29.09, 29.40, 50.11, 50.30, 51.58, 60.27, 89.82, 94.17, 107.05, 109.87, 111.80, 112.19, 112.46, 112.93, 121.49, 134.30, 137.58, 141.80, 145.47, 149.74, 152.92, 171.44, 176.74

(Preparation of Compound (E-5))

A compound (E-5) (4-[4-(N,N-butyl 4-hydroxybutyl)aminophenyl] 3-cyano-5,5-dimethylfuran-2(5H)-ylidene)malononitrile) was synthesized by the following procedure.

<Synthesis of 2-methyl-trimethylsilyloxypropionitrile (E5-1)>

[Chem. 16]

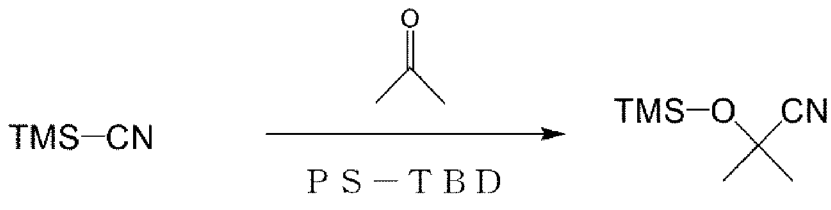


(E5-1)

1,5,7-Triazabicyclo[4,4,0] 5-decene polystyrene (PS-TBD) (100 mg (0.121 mmol)) was added to acetone (100 mL), and trimethylsilylcyanide (10.0 g (101 mmol)) was added dropwise at room temperature. After the reaction mixture was stirred at room temperature for three hours, PS-TBD was filtered, and acetone was concentrated under reduced pressure, thereby obtaining 14.4 g of a compound expressed by the formula (E5-1) (hereinafter, referred to as "compound (E5-1)" in some cases) (yield: 100%).

$^1$H-NMR analysis and $^{13}$C-NMR analysis of the compound (E5-1) were performed.

$^1$H-NMR $CDCl_3$: 0.24 (s 9H), 1.60 (s 6H)
$^{13}$C-NMR $CDCl_3$: 1.32, 30.89, 66.17, 122.79

<Synthesis of 1-(4-fluorophenyl)-2-hydroxy-2-methylpropan-1-one (E5-2)>

[Chem. 17]

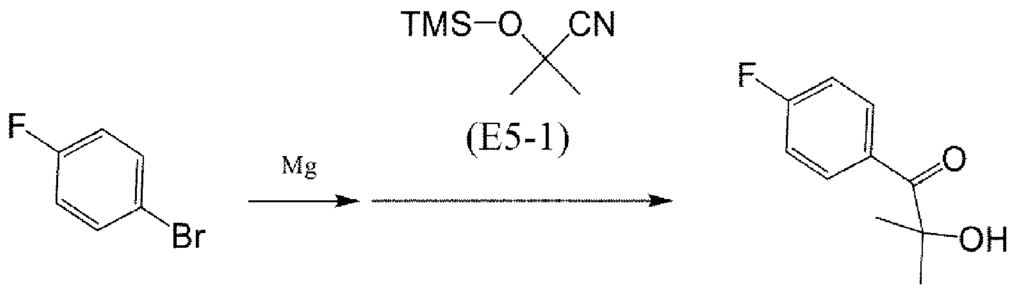


(E5-2)

THF (18 mL) was added to magnesium (3.22 g (132 mmol)) with several drops of 1,2-dibromoethane and a solution of 4-bromofluorobenzene (20.1 g (115 mmol)) diluted with THF (10 mL) was added dropwise while being cooled with water and stirred. After the solution was continuously stirred at room temperature for three hours, the solution of the compound (E5-1) (14.4 g (101 mmol)) and THF (20 mL) was added dropwise while being cooled with water and stirred. After stirred at room temperature for 16 hours, the solution was cooled under 10 °C, and a 6 mol/L hydrochloric acid solution (110 mL) was slowly added dropwise. After the solution was stirred at room temperature for 2.5 hours,

sodium bicarbonate (40 g) was added portionwise to the solution to neutralize the solution. The solution was extracted with ethyl acetate (300 mL) and 10% salt water (300 mL). The organic layer was washed with 10% salt water and then dried with anhydrous sodium sulfate, and the solvent was concentrated under reduced pressure, thereby obtaining a crude compound of a compound expressed by the formula (E5-2) (hereinafter, referred to as "compound (E5-2)" in some cases). The crude compound was purified by silica gel column chromatography (chloroform/ethyl acetate: 10/1) to obtain 10.6 g of the compound (E5-2) (yield: 58%).

<Synthesis of 3-cyano-2-dicyanomethylene-4-(4-fluorophenyl)-5,5-dimethyl-2,5-dihydrofuran (E5-3)>

[Chem. 18]

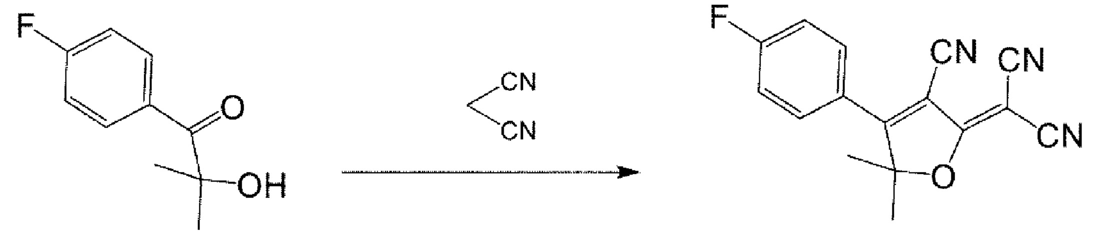

(E5-2) (E5-3)

The compound (E5-2) (10.6 g (58.1 mmol)) and malononitrile (11.5 g (174 mmol)) were dissolved in pyridine (45 mL), acetic acid (0.2 g) was added, and the reaction mixture was stirred at room temperature for five days. The reaction mixture was dispersed in water (900 mL), and precipitated crystals were filtered. The obtained crystals were washed with water and then with methanol and dried under reduced pressure at 70°C, thereby obtaining a compound expressed by the formula (E5-3) (hereinafter, referred to as "compound (E5-3)" in some cases) (12.0 g (43.0 mmol)).

On the compound (E5-3), $^1H$-NMR analysis and $^{13}C$-NMR analysis were performed, and the melting point was measured with a differential scanning calorimeter.

$^1H$-NMR DMSO-d6: 1.75 (s 6H), 7.53 (dd 2H), 7.91 (dd 2H)
$^{13}C$-NMR DMSO-d6
24.50, 55.61, 100.60, 103.24, 110.99, 111.32, 112.19, 116.87, 123.91, 131.32, 163.69, 165.37, 177.01
DSC: mp 273°C

<Synthesis of (E-5)>

[Chem. 19]

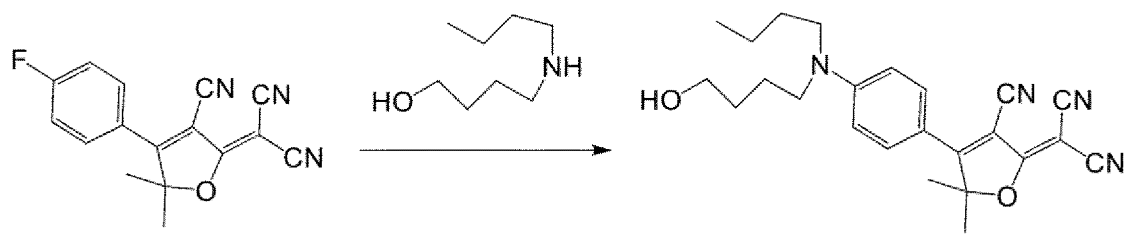

(E5-3) (E-5)

The compound (E5-3) (7.20 g (25.8 mmol)) and N,N-butyl 4-hydroxybutylamine (11.3 g (77.8 mmol)) were added to pyridine (130 mL) and acetonitrile (90 mL) and heated and stirred at an oil bath temperature of 50°C for 22 hours. The solvent was concentrated under reduced pressure at 50°C. THF (450 mL) and ethyl acetate (450 mL) were added to and dissolved in a concentrate. This was washed with 10% salt water (600 mL) in which potassium carbonate (60 g) had been dissolved and then dried with anhydrous sodium sulfate, and the solvent was concentrated under reduced pressure, thereby obtaining a crude product of compound (E-5). The crude product was purified through silica gel column chromatography to obtain red crystals. This was washed with ethyl acetate and then with methanol, and

dried under reduced pressure at 70°C to obtain a compound (E-5) (6.01 g (14.8 mmol)) (yield: 57%).

On the compound (E-5), $^{1}H$-NMR analysis, $^{13}C$-NMR analysis and mass analysis were performed, and the melting point was measured with a differential scanning calorimeter.

$^{1}H$-NMR DMSO-d6
0.93 (t 3H), 1.35 (m 2H), 1.48 (m 2H), 1.53-1.65 (m 4H), 1.81 (s 6H), 3.43-3.49 (m 6H), 4.49 (t 1H), 6.92 (d 2H), 8.05 (d 2H)
$^{13}C$-NMR DMSO-d6
13.67, 19.41, 23.61, 26.60, 28.95, 29.41, 50.04, 50.21, 50.38, 60.27, 88.90, 98.12, 112.12, 112.35, 112.57, 113.63, 113.69, 132.60, 152.77, 173.98, 177.81
DSC: mp 249.8°C
ESI-MS: M+1=405.2

(Synthesis of Base Polymer (A-4))

7.50 g (74.9 mmol) of methyl methacrylate (MMA), 3.00 g (19.3 mmol) of 2-(isocyanatoethyl) methacrylate (MOI) and 0.464 g (2.83 mmol) of azobisisobutyronitrile (AIBN) were dissolved in 15 mL of dehydrated toluene, argon was encapsulated, and then the solution was stirred in an oil bath at 60 °C to 61 °C for three hours. The reaction mixture was cooled to room temperature and then added dropwise to 450 mL of dehydrated diisopropyl ether (IPE) to filter the precipitate. The precipitate was washed with dehydrated IPE and dried under reduced pressure at 50°C, thereby obtaining 8.48 g of a base polymer (A-4).

As a result of obtaining a derivative of the base polymer (A-4) in the same manner as in the procedure of the derivatization of the base polymer (A-1) and analyzing the derivative, the glass transition temperature Tg was 99°C, the weight-average molecular weight Mw was 76900, and the number-average molecular weight Mn was 32100.

(Synthesis of Base Polymer (A-5))

7.90 g (78.9 mmol) of methyl methacrylate (MMA), 3.32 g (21.4 mmol) of 2-(isocyanatoethyl) methacrylate (MOI) and 0.497 g (3.03 mmol) of azobisisobutyronitrile (AIBN) were dissolved in 15 mL of dehydrated toluene, argon was encapsulated, and then the solution was stirred in an oil bath at 60°C for two hours. The reaction mixture was cooled to room temperature, diluted with dehydrated toluene (8 mL) and then added dropwise to 450 mL of dehydrated diisopropyl ether (IPE) to filter the precipitate. The precipitate was washed with dehydrated IPE and dried under reduced pressure at 70°C, thereby obtaining 8.325 g of a base polymer (A-5).

As a result of obtaining a derivative of the base polymer (A-5) in the same manner as in the procedure of the derivatization of the base polymer (A-1) and analyzing the derivative, the glass transition temperature Tg was 99°C, the weight-average molecular weight Mw was 83400, and the number-average molecular weight Mn was 36900.

(Manufacturing of EO Polymer (EO-4))

1.05 g of the base polymer (A-4) obtained above was dissolved in 65 mL of dehydrated tetrahydrofuran (THF). 0.90 g (0.77 mmol) of the compound (E-4) and 30 μL of dibutyltin dilaurate (DBTDL) were added to this, and the solution was stirred in an oil bath at 60 °C for two hours. Next, 3 mL of dehydrated methanol was added and stirred at 60 °C for 45 minutes. The reaction mixture was cooled, then, poured into 650 mL of diisopropyl ether (IPE) and stirred. A precipitated powder was filtered, washed twice with IPE (100 mL) and dried under reduced pressure at 50°C. 1.29 g of the EO polymer (EO-4) was obtained as a black powder (glass transition temperature Tg: 146°C).

(Manufacturing of EO Polymer (EO-5))

1.754 g (3.35 mmol) of the base polymer (A-5) obtained above was dissolved in 105 mL of dehydrated tetrahydrofuran (THF). 0.754 g (1.86 mmol) of the compound (E-5) and 100 μL of dibutyltin dilaurate (DBTDL) were added to this, and the solution was stirred in an oil bath at 55°C for two hours. Next, 5 mL of dehydrated methanol was added and stirred at 60°C for 120 minutes. The reaction mixture was cooled, then, poured into 1050 mL of diisopropyl ether (IPE) and stirred. A precipitated powder was filtered, washed three times with IPE (100 mL) and dried under reduced pressure at 70°C. 1.66 g of the EO polymer (EO-5) was obtained as a reddish orange powder (glass transition temperature Tg: 120°C).

[Determination of Figure of Merit FOM1 and Figure of Merit FOM2]

Upon the calculation of the figures of merit FOM1 and FOM2, films of the EO polymers were formed by the following procedure, and the propagation loss per unit length $\alpha$, refractive index n and electro-optic coefficient r of the EO polymers (EO-1), (EO-4), and (EO-5) were measured.

[Film-Forming Method of EO Polymer]

A solution in which the concentration was adjusted to 1 to 20 weight% by adding each of the EO polymers (EO-1), (EO-4), and (EO-5) to cyclohexanone was applied to a cleaned substrate (quartz glass) using a spin coater 1H-DX2 manufactured by MIKASA CO., LTD under a condition of 500 to 6000 rotations/minute and then dried at near the glass transition temperature (Tg) in a vacuum for one hour. Conditions of the concentration of the polymer solution and the rotation speed of the spin coater were appropriately selected so as to obtain a desired film thickness.

[Absorbance Spectrum of Thin Film of EO Polymer]

The absorbance spectrum of a thin film of each of the EO polymers (EO-1), (EO-4), and to (EO-5) having a film thickness of approximately 0.15 $\mu$m, which had been formed on the quartz glass by the above-described film-forming method, was measured using a spectrophotometer UH-4150 manufactured by Hitachi High-Tech Science Corporation. The absorbance was divided by the film thickness, thereby calculating the absorption coefficient per unit length a ($\omega$).

[Absorbance Spectrum of Thick Film of EO Polymer]

Indents with three kinds of depths were formed in a range of 40 to 350 $\mu$m on quartz glass and filled with the EO polymer, and the surface was polished, thereby producing thick films of the EO polymer with three kinds of film thicknesses regarding each of the EO polymers (EO-1), (EO-4), and (EO-5). The absorbance spectrum of the thick film of the EO polymer with each film thickness was measured using the spectrophotometer UH-4150 manufactured by Hitachi High-Tech Science Corporation. A graph where the absorbance was plotted with respect to each film thickness at individual wavelengths (frequencies $\omega$) was approximated by a linear function, and the absorption coefficient per unit length a ($\omega$) at the frequency $\omega$ was calculated from the slope.

[Propagation Loss per Unit Length $\alpha$ of EO Polymer]

The propagation loss per unit length of an optical waveguide (0.4 dB/cm) calculated by simulation was added to the absorption coefficient a ($\omega$), and the propagation loss per unit length $\alpha$ ($\omega$) was obtained. Regarding the absorption coefficient a ($\omega$), for values of less than $1 \times 10^{-3}$ among the measurement values of the absorbance spectrum of the thin film, errors were large due to the limitation of the measuring instrument, and thus, at wavelengths at which the absorbance of the thin film was $1 \times 10^{-3}$ or more (frequency $\omega$), the values of the absorption coefficient a ($\omega$) calculated from the absorbance of the thin film were used, and, at wavelengths at which the absorbance of the thin film was less than $1 \times 10^{-3}$ (frequency $\omega$), the values of the absorption coefficient a ($\omega$) calculated from the absorbance of the thick film were used.

[Refractive Index of EO Polymer]

The refractive index n of each of the EO polymers (EO-1), (EO-4), and (EO-5) was measured from the EO polymer film having a film thickness of approximately 3 $\mu$m formed on the quartz glass using Prism Coupler 2010/M manufactured by Metricon Corporation.

[Electro-Optic Coefficient r of EO Polymer]

The EO coefficient was measured in the same manner as in the method described in a reference thesis ("Transmission ellipsometric method without an aperture for simple and reliable evaluation of electro-optic properties", Toshiki Yamada and Akira Otomo, Optics Express, vol. 21, pages 29240-48(2013)). As laser light sources, DFB laser 81663A manufactured by Agilent Technologies, Inc. (wavelengths: 1308 nm and 1550 nm), DFB pro laser manufactured by TOPTICA Photonics AG (wavelength: 976 nm) and OBIS LX laser manufactured by Coherent, Inc. (wavelength: 640 nm) were used.

[Calculation of Figures of Merit FOM1 and FOM2 Based on Inhomogeneous Broadening Analysis (Gaussian distribution formula)]

Upon the calculation of the figures of merit FOM1 and FOM2 based on inhomogeneous broadening analysis (Gaussian distribution formula), the following formula was used as the model formulae of the linear susceptibility $\chi^{(1)}(\omega)$ and the second-order nonlinear susceptibility $\chi^{(2)}(\omega, \omega, 0)$. In the formula, $\omega$ is the frequency, m is the order of resonance, $\omega_{m0}$ is the resonant frequency, $\Gamma_{m0}$ is the homogeneous broadening width, $\Delta\omega_{m0}$ is the inhomogeneous broadening width, $\chi_m^{(1)}$ is the magnitude of linear susceptibility, and $\chi_m^{(2)}$ is the magnitude of second-order nonlinear susceptibility.

The order of resonance m can be appropriately selected from the degree of reproducibility (the difference between the measurement value and the computation value) of the absorbance spectrum; however, here, m = 4 was assumed in analyses.

[Math 3]

$$\chi^{(1)}(\omega)=\sum_m \frac{\chi_m^{(1)}}{\Delta\omega_{m0}\sqrt{\pi}}\int_{-\infty}^{\infty}\left[\frac{1}{\omega'_{m0}-\omega-i\Gamma_{m0}}+\frac{1}{\omega'_{m0}+\omega+i\Gamma_{m0}}\right]\exp\left[-\left(\frac{\omega'_{m0}-\omega_{m0}}{\Delta\omega_{m0}}\right)^2\right]d(\omega'_{m0}-\omega_{m0})$$

$$\chi^{(2)}(\omega,\omega,0)=\sum_m \frac{\chi_m^{(2)}}{\Delta\omega_{m0}\sqrt{\pi}}\int_{-\infty}^{\infty}\left\{\frac{2}{\omega'_{m0}}\left[\frac{1}{\omega'_{m0}-\omega-i\Gamma_{m0}}+\frac{1}{\omega'_{m0}+\omega+i\Gamma_{m0}}\right]+\left(\frac{1}{\omega'_{m0}-\omega-i\Gamma_{m0}}\right)^2+\left(\frac{1}{\omega'_{m0}+\omega+i\Gamma_{m0}}\right)^2\right\}$$
$$\times\exp\left[-\left(\frac{\omega'_{m0}-\omega_{m0}}{\Delta\omega_{m0}}\right)^2\right]d(\omega'_{m0}-\omega_{m0})$$

The value measured in the section [Absorbance Spectrum of Thin Film of EO Polymer] was fitted with the formula (Q3) and formula (Q4), thereby determining the magnitude $\chi_m^{(1)}$ of linear susceptibility, the resonant frequency $\omega_{m0}$, the homogeneous broadening width $\Gamma_{m0}$ and the inhomogeneous broadening width $\Delta\omega_{m0}$.

[Math 4]

$$\varepsilon_r(\omega) = 1 + \chi_b^{(1)} + \chi^{(1)}(\omega) \qquad \text{(Q3)}$$

$$a(\omega) = \frac{2\omega}{c}\left[\frac{|\varepsilon_r(\omega)| - Re[\varepsilon_r(\omega)]}{2}\right]^{1/2} \qquad \text{(Q4)}$$

Next, the values at wavelengths of 1308 nm and 1532 nm measured in the section [Refractive Index of EO polymer] were fitted with the following formula (Q5), thereby determining the background term $\chi_b^{(1)}$ of the linear susceptibility.

[Math 5]

$$n(\omega) = \left[\frac{|\varepsilon_r(\omega)| + Re[\varepsilon_r(\omega)]}{2}\right]^{1/2} \qquad \text{(Q5)}$$

The fitting of the absorption spectrum and the fitting of the refractive index were repeated until the amount of $\chi_b^{(1)}$ changed became $1 \times 10^{-6}$ or less, and $\chi_m^{(1)}$, $\omega_{m0}$, $\Gamma_{m0}$, $\Delta\omega_{m0}$ and $\chi_b^{(1)}$ were finally determined.

Subsequently, the values at wavelengths of 1308 nm and 1550 nm measured in the section [Electro-Optic Coefficient r of EO Polymer] for the EO polymer (EO-1), the values at wavelengths of 976 nm, 1308 nm and 1550 nm for the EO polymer (EO-4), and the values at wavelengths of 640 nm, 976 nm, 1308 nm and 1550 nm for the EO polymer (EO-5) were fitted with the formula (Q6), respectively, and the magnitudes $\chi_m^{(2)}$ of second-order nonlinear susceptibility were determined. The fitting was performed using a nonlinear least-squares method (Levenberg-Marquardt method).

[Math 6]

$$r(\omega) = -\frac{2Re\left[\chi^{(2)}(\omega,\omega,0)\right]}{n^4(\omega)} \qquad \text{(Q6)}$$

For the EO polymers (EO-1), (EO-4), and (EO-5) obtained above, the refractive index n and the electro-optic coefficient r were determined from the relational formulae obtained above, and the figures of merit FOM1 and FOM2 were calculated using the measurement values as the propagation loss per unit length $\alpha$. Upon the calculation of the figure of merit FOM2, in the case of $\alpha \leq \alpha_c$, $\alpha_c$ was used as $\alpha$, and, in the case of $\alpha > \alpha_c$, $\alpha$ was used. The results are shown in Table 2. Table 3 shows the maximum values ($\lambda$max) and minimum values ($\lambda$min) of the wavelengths at which the figure of merit FOM1 calculated above reaches 1.2 $(V \cdot cm)^{-1}$ or more and the maximum values ($\lambda$max) and minimum values ($\lambda$min) of the wavelengths at which the figure of merit FOM2 reaches 0.20 $(V \cdot dB)^{-1}$ or more.

[Table 2]

| Kind of EO material | Wavelength λ [nm] | Refractive index n | Electro-optic coefficient r [pm/V] | Propagation loss per unit length α [dB/cm] | $n^3r$ [pm/V] | Figure of merit FOM1 $n^3r/\lambda^2$ [(V·cm)$^{-1}$] | Figure of merit FOM2 $n^3r/\alpha\lambda^2$ [(V·dB)$^{-1}$] | |
|---|---|---|---|---|---|---|---|---|
| | | | | | | | $\alpha_c$=0 | $\alpha_c$=6 |
| (EO-1) | 850 | 1.706 | -137 | $1.6\times10^5$ | -682 | -9.4 | $-5.8\times10^{-5}$ | $-5.8\times10^{-5}$ |
| | 980 | 1.779 | 246 | $4.3\times10^4$ | 1387 | 14 | $3.3\times10^{-4}$ | $3.3\times10^{-4}$ |
| | 1064 | 1.724 | 271 | $6.5\times10^3$ | 1391 | 12 | $1.9\times10^{-3}$ | $1.9\times10^{-3}$ |
| | 1310 | 1.648 | 115 | 30 | 514 | 3.0 | 0.1 | 0.1 |
| | 1550 | 1.627 | 85.4 | 3.5 | 368 | 1.5 | 0.44 | 0.26 |
| (EO-4) | 640 | 1.698 | -176 | $3.1\times10^5$ | -863 | -21 | $-6.8\times10^{-5}$ | $-6.8\times10^{-5}$ |
| | 850 | 1.595 | 51.5 | 1.5 | 209 | 2.9 | 1.9 | 0.48 |
| | 980 | 1.572 | 34.8 | 0.93 | 135 | 1.4 | 1.5 | 0.23 |
| | 1064 | 1.563 | 30.1 | 0.85 | 115 | 1.0 | 1.2 | 0.17 |
| | 1310 | 1.550 | 23.6 | 0.55 | 88.0 | 0.51 | 0.94 | $8.6\times10^{-2}$ |
| | 1550 | 1.544 | 21.0 | 2.2 | 77.4 | 0.32 | 0.15 | $5.4\times10^{-2}$ |
| (EO-5) | 640 | 1.616 | 27.3 | 4.4 | 115 | 2.8 | 0.64 | 0.47 |
| | 850 | 1.570 | 16.8 | 2.1 | 64.9 | 0.90 | 0.43 | 0.15 |
| | 980 | 1.560 | 15.5 | 1.8 | 58.9 | 0.61 | 0.34 | 0.10 |
| | 1064 | 1.557 | 15.0 | 744 | 56.7 | 0.50 | 0.27 | $8.3\times10^{-2}$ |
| | 1310 | 1.550 | 14.3 | 2.5 | 53.3 | 0.31 | 0.13 | $5.2\times10^{-2}$ |
| | 1550 | 1.546 | 14.0 | 2.9 | 51.8 | 0.22 | $6.3\times10^{-2}$ | $3.6\times10^{-2}$ |

[Table 3]

| Kind of EO material | | Wavelength at which figure of merit FOM1 becomes 1.2 $(V\cdot cm)^{-1}$ or more [nm] | Wavelength at which figure of merit FOM2 becomes 0.20 $(V\cdot dB)^{-1}$ or more [nm] | |
|---|---|---|---|---|
| | | | $\alpha_c=0$ | $\alpha_c=6$ |
| (EO-1) | λmin | 906 | 1420 | 1420 |
| | λmax | 1670 | 1638 | 1638 |
| (EO-4) | λmin | 658 | 766 | 766 |
| | λmax | 1018 | 1168 | 1018 |
| (EO-5) | λmin | 526 | 600 | 600 |
| | λmax | 774 | 1106 | 774 |

[Comparative Example 2]

As an optical control element, an optical modulator for use at a wavelength of 1550 nm was produced by the following procedure.

(Preparation of EO Polymer (E-1a))

An EO polymer (E-1a) expressed by the following formula was prepared by the procedure described in Example 2 of WO 2018/003842. As the figure of merit at a wavelength of 1550 nm of the EO polymer (E-1a) calculated based on inhomogeneous broadening analysis (Gaussian dispersion formula), the figure of merit FOM1 was 1.33 $(V\cdot cm)^{-1}$, and the figure of merit FOM2 was 0.22 $(V\cdot dB)^{-1}$.

[Chem. 20]

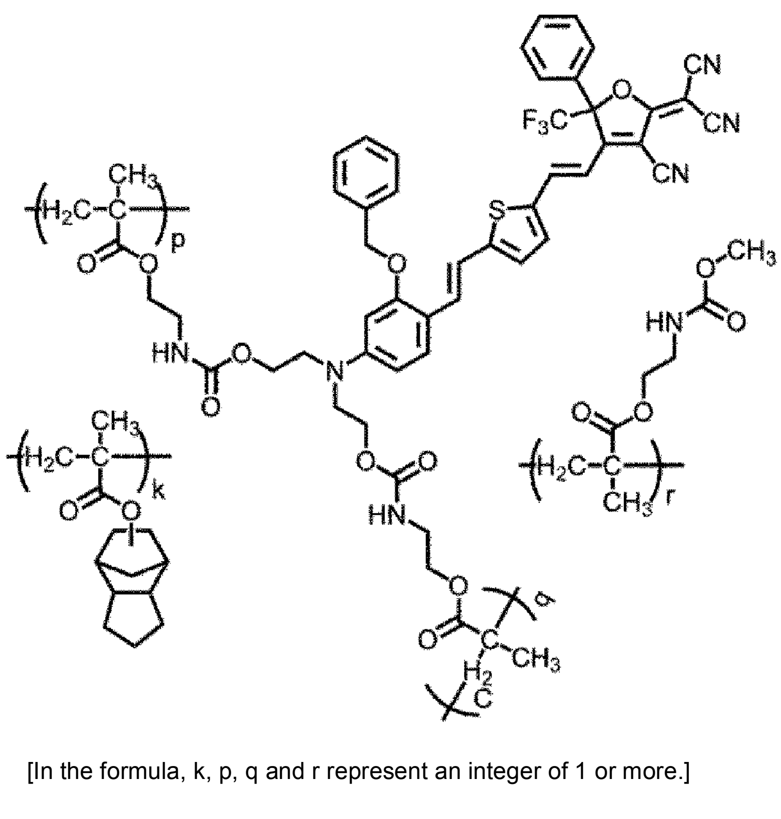

(E−1a)

[In the formula, k, p, q and r represent an integer of 1 or more.]

(Preparation of Clad Material Composition)

0.67 g of 3-methacryloyloxypropyltrimethoxysilane (manufactured by Tokyo Chemical Industry Co., Ltd.) and 0.06 g of zirconium propoxide (manufactured by Tokyo Chemical Industry Co., Ltd.) were added to a solution mixture of 0.41 g of ethanol and 0.05 g of a 0.1 N hydrochloric acid aqueous solution and stirred. This mixture was held at 5°C or lower for 12 hours or more, and then 0.071 g of Omnirad 819 (manufactured by IGM Resins) was added and stirred for 30 minutes, thereby producing a clad material composition.

(Production of Lower Electrode)

An IZO film (100 nm) was formed on a thermal oxide film-formed silicon substrate having a thickness of 2 μm by a sputtering method to produce a lower electrode.

(Production of Lower Clad)

The clad material composition prepared above was applied onto the lower electrode by spin coating (3,500 rpm for 30 seconds), heated at 95°C for 30 minutes and at 120°C for 15 minutes, irradiated with LED light having a wavelength of 365 nm at 100°C and then heated at 190°C for 16 hours. The film thickness of a produced lower clad was 2.21 μm.

(Production of Core Layer)

A 15 mass% cyclohexanone solution of the EO polymer (E-1a) was applied to the lower clad produced above by spin coating (1,300 rpm for 30 seconds) and heated in a vacuum at 180°C for one hour. The film thickness of a produced core layer was 1.40 μm.

(Production of Electrode for Polling and Polling Treatment)

An IZO film (100 nm) was formed on the core layer produced above by the sputtering method, an electrode for polling was produced, and a structure for a polling treatment was obtained. The temperature of this structure was raised to 176°C, then, a voltage of 420 V was applied between the lower electrode and the electrode for polling for three minutes, and a polling treatment was performed. The structure was cooled to room temperature under the application of the voltage, and then the voltage was turned off. After that, the electrode for polling was removed with an etching solution (ITO-06N manufactured by Kanto Chemical Co., Inc.).

(Formation of Optical Waveguide)

An IZO film (50 nm) was formed on the core layer of the structure on which the polling treatment had been performed as a mask for processing by the sputtering method. After that, a mask pattern was produced by photolithography, the core layer was processed into a rectangular structure (1.32 μm × 1.40 μm) by a dry etching method in which a reactive ion etching apparatus was used, and this was used as an optical waveguide (core). The optical waveguide formed a Mach-Zehnder (MZ) type optical modulator structure.

(Production of Upper Clad)

The clad material composition prepared above was applied onto the optical waveguide formed above by spin coating (3,500 rpm for 30 seconds), heated at 90°C for 10 minutes, and then irradiated with LED light having a wavelength of 365 nm at 100°C for five minutes. The film thickness of the produced upper clad was 1.65 μm from the upper surface of the optical waveguide (core).

(Production of Upper Electrode)

An IZO film (100 nm) was formed on the upper clad layer produced above by the sputtering method. After that, a mask pattern was produced by photolithography, and the IZO film was patterned with an etching solution (ITO-06N manufactured by Kanto Chemical Co., Inc.), thereby forming an upper electrode. The length L of the upper electrode was set to 1 cm.

(Production of Optical Modulator)

Both end faces of the optical waveguide were cut with a dicing saw to produce light input and output end faces, whereby an optical modulator having a structure corresponding to Fig. 1 was completed. Fig. 3 is an image showing a cross section of the light input end face of the produced optical modulator. Fig. 4 is a graph showing the time waveforms of optical modulation of the produced optical modulator. As shown in Fig. 4, a channel Ch2 is the applied voltage, and a channel Ch1 is the 1550 nm output light intensity of the MZ optical modulator. With respect to a voltage change with a triangular waveform, a light output waveform of a typical MZ optical modulator is shown, the above-described $V_\pi$ was 4.4 V, and the above-described $V_\pi L$ was 4.4 V·cm.

[Example 3]

As an optical control element, an optical modulator for use at a wavelength of 640 nm was produced by the following procedure.

(Preparation of EO Polymer (E-5a))

An EO polymer (E-5a) expressed by the following formula was prepared by the following procedure. As the figure of merit at a wavelength of 640 nm of the EO polymer (E-5a) calculated based on inhomogeneous broadening analysis (Gaussian dispersion formula), the figure of merit FOM1 was 3.61 $(V\cdot cm)^{-1}$, and the figure of merit FOM2 was 0.60 $(V\cdot dB)^{-1}$.

[Chem. 21]

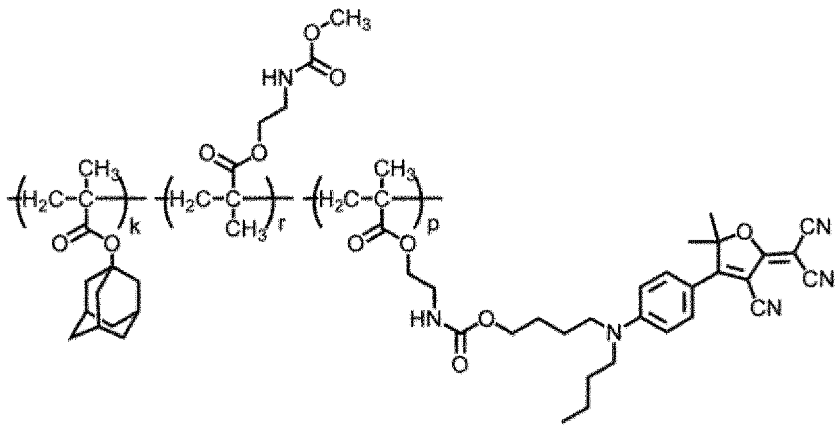

(E−5a)

[In the formula, k, p and r represent an integer of 1 or more.]

(Synthesis of Base Polymer (A-5a))

7.00 g (31.8 mmol) of adamantyl methacrylate (AdMA), 2.60 g (16.8 mmol) of 2-(isocyanatoethyl) methacrylate (MOI) and 0.266 g (1.62 mmol) of azobisisobutyronitrile (AIBN) were dissolved in 18 mL of dehydrated toluene, argon was encapsulated, and then the solution was stirred in an oil bath at 70°C for two hours. The reaction mixture was cooled to room temperature, diluted with 15 mL of dehydrated toluene and then added dropwise to a mixture of 450 mL of dehydrated diisopropyl ether (IPE) and 15 mL of dehydrated toluene, and a precipitate was filtered. The precipitate was sequentially washed with dehydrated IPE and dehydrated hexane, then, dried under reduced pressure at 45°C, thereby obtaining 8.70 g of a base polymer (A-5a).

(Derivatization of Base Polymer (A-5a) (Methyl Carbamate Derivative))

Under Ar gas, 1.0 g of the base polymer (A-5a) was dissolved in 35 mL of dehydrated tetrahydrofuran, 3 mL of dehydrated methanol and 40 μL of dibutyltin dilaurate (DBTDL) were added, and the solution was stirred in an oil bath at 55°C for two hours. The reaction mixture was cooled, then, poured into 350 mL of diisopropyl ether (IPE) and stirred. A precipitated powder was filtered, washed with 100 mL of IPE and 100 mL of hexane and dried under reduced pressure at 65 °C, thereby obtaining a derivative of the base polymer (A-5a).

As a result of analyzing a derivative of the base polymer (A-5a) in the same manner as in the analysis of the derivative of the base polymer (A-1), the glass transition temperature Tg was 155°C, the weight-average molecular weight Mw was 78600, and the number-average molecular weight Mn was 31300.

(Manufacturing of EO Polymer (EO-5a))

6.842 g (11.2 mmol) of the base polymer (A-5a) obtained above was dissolved in 300 mL of dehydrated tetrahydrofuran (THF). 3.430 g (8.48 mmol) of the compound (E-5) and 100 μL of dibutyltin dilaurate (DBTDL) were added to this, and the solution was stirred in an oil bath at 55 °C for two hours. Next, 40 mL of dehydrated methanol was added and stirred at 55 °C for one hour. The reaction mixture was cooled, then, poured into 3.6 L of diisopropyl ether (IPE) and stirred. A precipitated powder was filtered, washed with IPE (100 mL) twice and methanol (100 mL) twice and dried under reduced pressure at 70 °C. 9.10 g of the EO polymer (EO-5a) was obtained as a reddish orange powder (glass transition temperature Tg: 164°C).

(Production of Lower Clad)

A clad material composition prepared by the procedure described in Comparative Example 2 was applied onto a lower electrode produced by the procedure described in Comparative Example 2 by spin coating (3,000 rpm for 30 seconds), heated at 95 °C for 30 minutes and at 120 °C for 15 minutes, heated at 190 °C for 16 hours, and then irradiated with LED light of 365 nm at 100 °C. The film thickness of a produced lower clad was 1.27 μm.

(Production of Core Layer)

A 12 mass% cyclohexanone solution of the EO polymer (E-5a) was applied to the lower clad produced above by spin coating (3,200 rpm for 30 seconds) and heated in a vacuum at 170 °C for one hour. The film thickness of a produced core layer was 0.52 μm.

(Production of Electrode for Polling and Polling Treatment)

An IZO film (100 nm) was formed on the core layer produced above by the sputtering method, an electrode for polling was produced, and a structure for a polling treatment was obtained. The temperature of this structure was raised to 164 °C, then, a voltage of 240 V was applied between the lower electrode and the electrode for polling for one minute, and a polling treatment was performed. The structure was cooled to room temperature under the application of the voltage, and then the voltage was turned off. After that, the electrode for polling was removed with an etching solution (ITO-06N manufactured by Kanto Chemical Co., Inc.).

(Formation of Optical Waveguide)

An IZO film (50 nm) was formed on the core layer of the structure on which the polling treatment had been performed as a mask for processing by the sputtering method. After that, a mask pattern was produced by photolithography, the core layer was processed into a ridge structure (a convex portion had a width of 0.99 μm and a height of 0.27 μm) by a dry etching method in which a reactive ion etching apparatus was used, and this was used as an optical waveguide (core). The optical waveguide formed a Mach-Zehnder (MZ) type optical modulator structure.

(Production of Upper Clad)

The clad material composition prepared by the procedure described in Comparative Example 2 was applied onto the optical waveguide formed above by spin coating (2,000 rpm for 30 seconds), heated at 90 °C for 10 minutes, and then irradiated with LED light having a wavelength of 365 nm at 100 °C for five minutes. The film thickness of the produced upper clad was 1.55 μm from the upper surface of the optical waveguide (core).

An IZO film (100 nm) was formed on the upper clad layer produced above by the sputtering method. After that, a mask pattern was produced by photolithography, and the IZO film was patterned with an etching solution (ITO-06N manufactured by Kanto Chemical Co., Inc.), thereby forming an upper electrode. The length L of the upper electrode was set to 0.5 cm.

(Production of Optical Modulator)

Both end faces of the waveguide were cut with a dicing saw to produce light input and output end faces, whereby

an optical modulator having a structure corresponding to Fig. 1 was completed. Fig. 5 is a cross-sectional image of the light input end face of the produced optical modulator. Fig. 6 is a graph showing the time waveforms of optical modulation of the produced optical modulator. In Fig. 6, a channel Ch1 is the 640 nm output light intensity of the MZ optical modulator, and a channel Ch2 is the applied voltage. With respect to a voltage change with a triangular waveform, a light output waveform of a typical MZ optical modulator is shown, the above-described $V_\pi$ was 2.48 V, and the above-described $V_\pi L$ was 1.24 V·cm.

Since the value of $V_\pi L$ calculated in Example 3 was smaller than the value of $V_\pi L$ calculated in Comparative Example 2, it is found that the optical modulator produced in Example 3 has excellent high-speed performance in a wavelength band near 640 nm and is useful (highly efficient) in the wavelength band.

[Examples 4 to 14]

EO polymers (EO-5(4)) to (EO-5(14)) in which compounds expressed by the following formula (E-5(4)) to formula (E-5(14)) (hereinafter, referred to as "compound (E-5(4))" or the like in some cases) were bonded to the base polymer were obtained by the following procedure.

[Chem. 22]

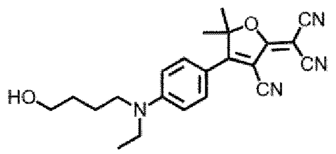

(E−5(4))

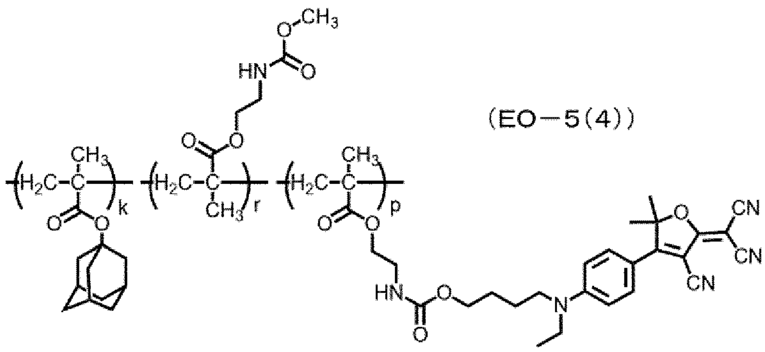

(EO−5(4))

[Chem. 23]

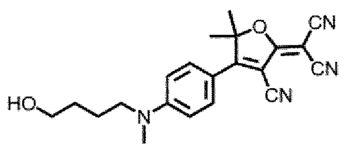

(E−5(5))

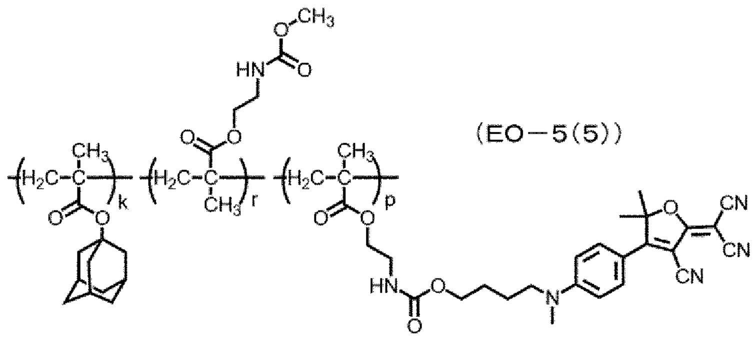

(EO−5(5))

[Chem. 24]

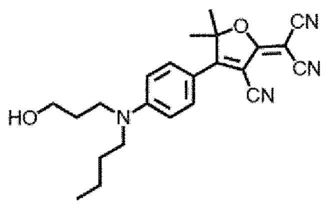

(E−5(6))

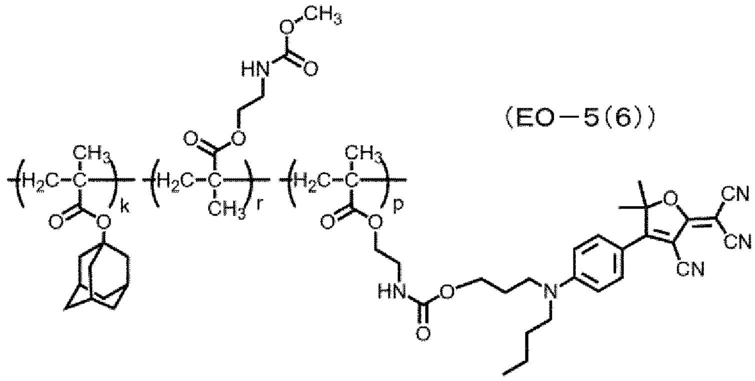

(EO−5(6))

[Chem. 25]

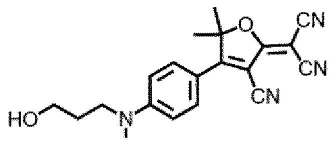

(E−5(7))

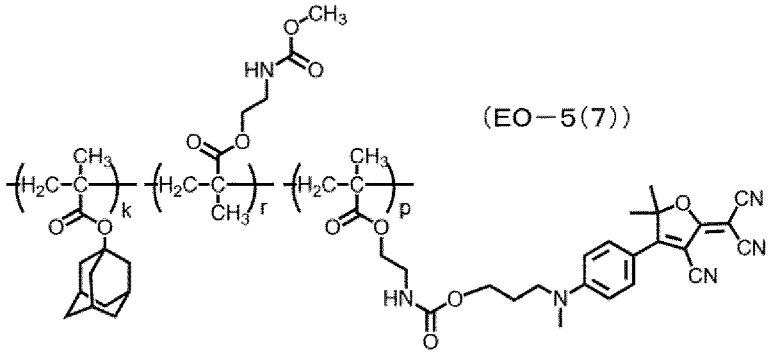

(EO−5(7))

[Chem. 26]

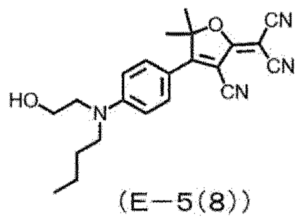

(E−5(8))

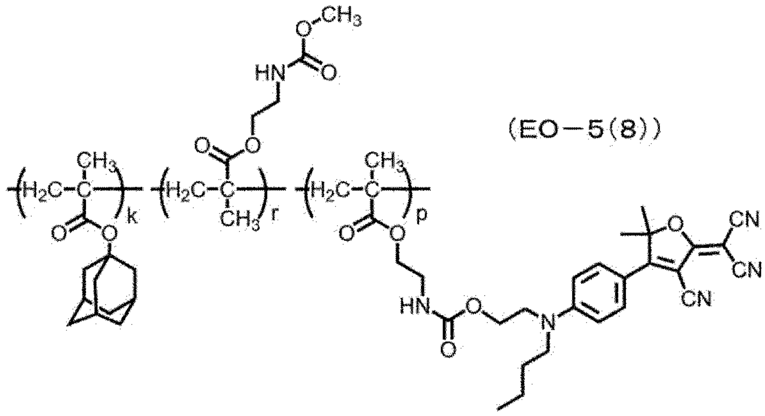

(EO−5(8))

[Chem. 27]

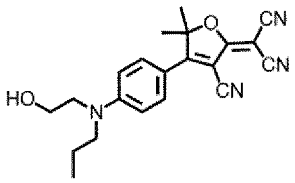

(E−5(9))

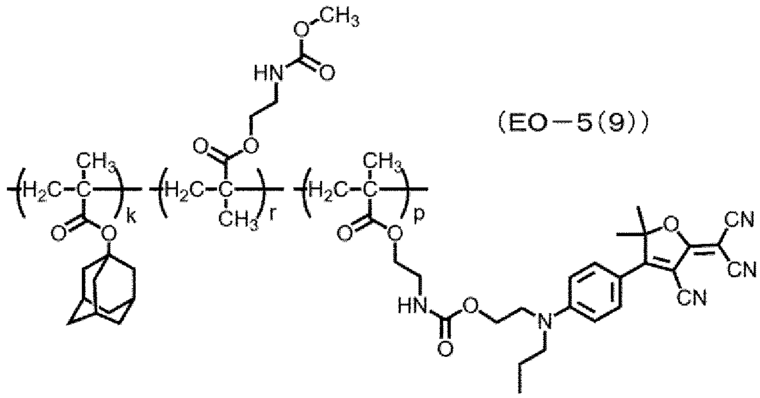

(EO−5(9))

[Chem. 28]

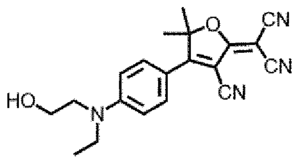

(E−5(10))

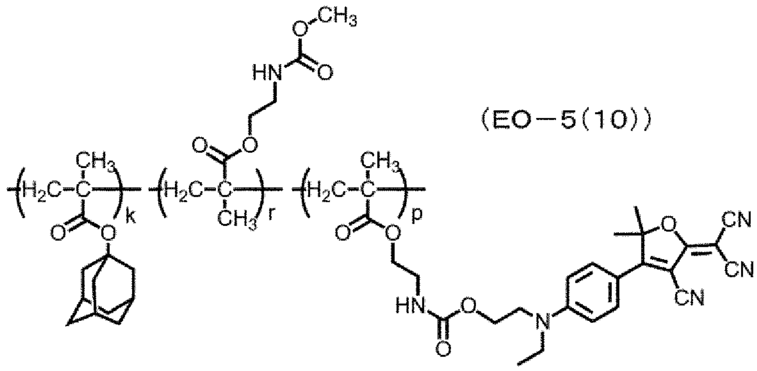

(EO−5(10))

[Chem. 29]

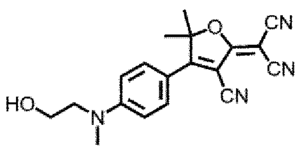

(E−5(11))

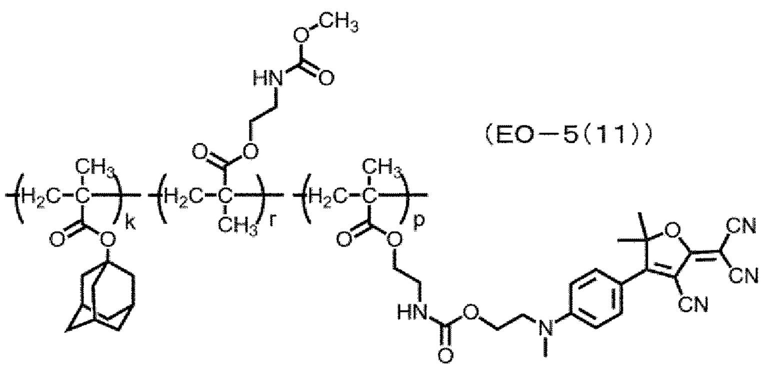

(EO−5(11))

[Chem. 30]

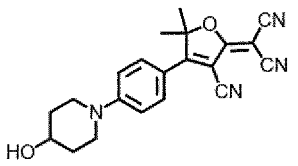

(E−5(12))

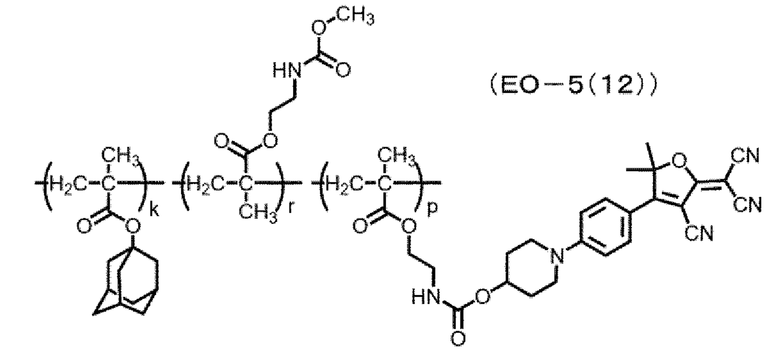

(EO−5(12))

[Chem. 31]

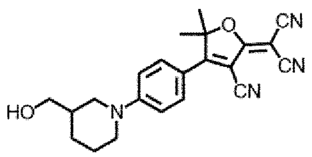

(E−5(13))

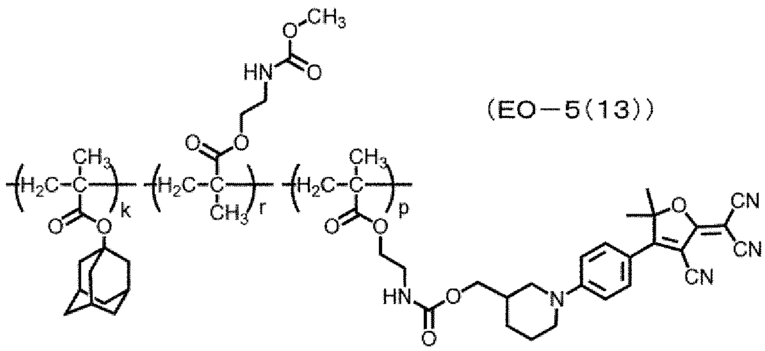

(EO−5(13))

[Chem. 32]

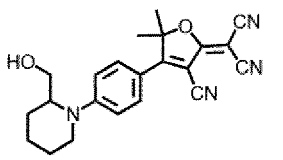

(E−5(14))

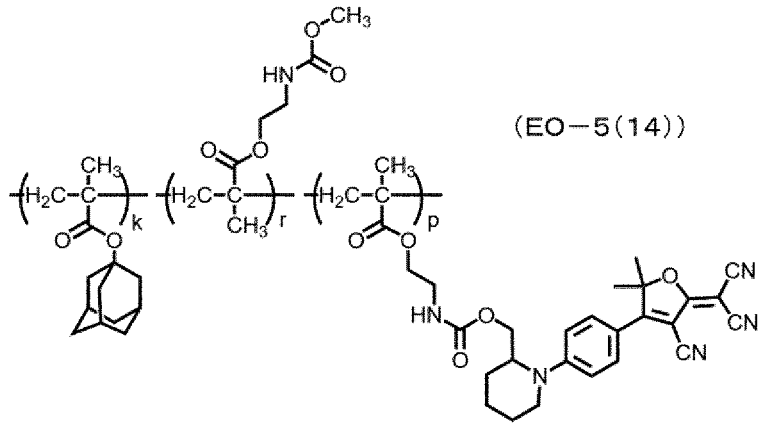

(EO−5(14))

[In the formulae, k, p, and r represent an integer of 1 or more.]

(Synthesis of Compound (E-5(4)) to (E-5(14)))

Using the compound (E5-3) and each of the compounds shown in Table 4, the reaction treatment was performed in the same manner as in the procedure described in the synthesis of (E-5), thereby obtaining compounds (E-5(4)) to (E-5(14)). The yields were as shown in Table 4.

[Table 4]

| Synthesized compound | Compound used in synthesis | Yield |
|---|---|---|
| (E-5(4)) | Ethyl-4-hydroxybutylamine | 51% |

(continued)

| Synthesized compound | Compound used in synthesis | Yield |
|---|---|---|
| (E-5(5)) | Methyl-4-hydroxybutylamine | 51% |
| (E-5(6)) | Butyl-3-hydroxypropylamine | 29% |
| (E-5(7)) | Methyl-3-hydroxypropylamine | 51% |
| (E-5(8)) | Butyl-2-hydroxyethylamine | 18% |
| (E-5(9)) | Propyl-2-hydroxyethylamine | 19% |
| (E-5(10)) | Ethyl-2-hydroxyethylamine | 32% |
| (E-5(11)) | Methyl-2-hydroxyethylamine | 24% |
| (E-5(12)) | Piperidin-4-ol | 67% |
| (E-5(13)) | Piperidin-3-ylmethanol | 76% |
| (E-5(14)) | Piperidin-2-ylmethanol | 12% |

On the compounds (E-5(4)) to (E-5(14)), $^{1}$H-NMR analysis and $^{13}$C-NMR analysis were performed, and the melting point was measured with a differential scanning calorimeter.

<Compound (E-5(4)): 2-(3-cyano-4-(4-(ethyl(4-hydroxybutyl)amino)phenyl)-5,5-dimethylfuran-2(5H)-ylidenemalononitrile>

$^{1}$H-NMR DMSO-d6
1.58 (t 3H), 1.48 (m 2H), 1.63 (m 2H), 1.81 (s 6H), 3.43 (m 2H), 3.49 (m 2H), 3.55 (m 2H), 4.48 (t 1H), 6.92 (d 2H), 8.05 (d 2H)
$^{13}$C-NMR DMSO-d6
12.20, 23.76, 26.60, 29.45, 44.78, 49.69, 50.40, 60.27, 88.94, 98.12, 112.05, 112.35, 112.57, 113.62, 113.69, 132.63, 152.58, 174.02, 177.81
DSC: mp 221°C

<Compound (E-5(5)): 2-(3-cyano-4-(4-((4-hydroxybutyl)(methyl)amino)phenyl)-5,5-dimethylfuran-2(5H)-ylidene-malononitrile>

$^{1}$H-NMR DMSO-d6
1.45 (m 2H), 1.60 (m 2H), 1.81 (s 6H), 3.13 (s 3H), 3.43 (t 2H), 3.55 (t 2H), 4.47 (t 1H), 6.94 (d 2H), 8.06 (d 2H)
$^{13}$C-NMR DMSO-d6
23.26, 26.57, 29.44, 38.18, 50.56, 51.46, 60.30, 89.29, 98.20, 112.12, 112.53, 112.53, 113.60, 113.64, 132.43, 153.52, 174.21, 177.80
DSC: mp 221°C

<Compound (E-5(6)): 2-(4-(4-(butyl(3-hydroxypropyl)amino)phenyl)-3-cyano-5,5-dimethylfuran-2(5H)-ylidene)malononitrile>

$^{1}$H-NMR DMSO-d6
0.93 (t 3H), 1.35 (m 2H), 1.56 (m 2H), 1.73 (m 2H), 1.81 (s 6H), 3.49 (m 4H), 3.55 (m 2H), 4.66 (t 1H), 6.94 (d 2H), 8.05 (d 2H)
$^{13}$C-NMR DMSO-d6
13.67, 19.42, 26.59, 28.91, 29.94, 47.44, 50.03, 50.41, 57.82, 88.96, 98.14, 112.10, 112.38, 112.57, 113.62, 113.69, 132.57, 152.82, 174.03, 177.81

DSC: mp 265°C

<Compound (E-5(7)): 2-(3-cyano-4-(4-((3-hydroxypropyl)(methyl)amino)phenyl)-5,5-dimethylfuran-2(5H)-ylidene)malononitrile>

$^{1}$H-NMR DMSO-d6
1.73 (m 2H), 1.81 (s 6H), 3.14 (s 3H), 3.46 (dd 2H), 3.60 (t 2H), 4.64 (t 1H), 6.94 (d 2H), 8.06 (d 2H)
$^{13}$C-NMR DMSO-d6
26.56, 29.62, 38.22, 48.74, 50.56, 57.78, 89.31, 98.22, 112.10, 112.53, 112.56, 113.59, 113.64, 132.40, 153.58, 174.25, 177.80
DSC: mp 237°C

<Compound (E-5(8)): 2-(4-(4-(butyl(2-hydroxyethyl)amino)phenyl)-3-cyano-5,5-dimethylfuran-2(5H)-ylidene)malononitrile>

$^{1}$H-NMR DMSO-d6
0.92 (t 3H), 1.35 (m 2H), 1.56 (m 2H), 1.81 (s 6H), 3.52 (m 2H), 3.60 (m 4H), 4.88 (t 1H), 6.95 (d 2H), 8.04 (d 2H)
$^{13}$C-NMR DMSO-d6
13.68, 19.38, 26.58, 28.62, 50.45, 50.58, 52.42, 58.23, 88.05, 98.14, 112.28, 112.45, 112.55, 113.61, 113.67, 132.44, 153.25, 174.05, 177.80
DSC: mp 219°C

<Compound (E-5(9)): 2-(3-cyano-4-(4-((2-hydroxyethyl)(propyl)amino)phenyl)-5,5-dimethylfuran-2(5H)-ylidene)malononitrile>

$^{1}$H-NMR DMSO-d6
0.91 (t 3H), 1.60 (m 2H), 1.81 (s 6H), 3.48 (t 2H), 3.60 (m 4H), 4.88 (t 1H), 6.96 (d 2H), 8.03 (d 2H)
$^{13}$C-NMR DMSO-d6
10.86, 19.78, 26.58, 50.46, 52.34, 52.44, 58.22, 89.06, 98.14, 112.31, 112.46, 112.55, 113.61, 113.67, 132.47, 153.31, 174.05, 177.81
DSC: mp 234°C

<Compound (E-5(10)): 2-(3-cyano-4-(4-(ethyl(2-hydroxyethyl)amino)phenyl)-5,5-dimethylfuran-2(5H)-ylidene)malononitrile>

$^{1}$H-NMR DMSO-d6
1.17 (t 3H), 1.81 (s 6H), 3.60 (m 6H), 4.89 (t 1H), 6.96 (d 2H), 8.04 (d 2H)
$^{13}$C-NMR DMSO-d6
11.86, 26.58, 45.34, 50.47, 51.99, 58.33, 89.08, 98.15, 112.24, 112.46, 112.55, 113.61, 113.67, 132.47, 153.09, 174.10, 177.81
DSC: mp 216°C

<Compound (E-5(11)): 2-(3-cyano-4-(4-((2-hydroxyethyl)(methyl)amino)phenyl-5,5-dimethylfuran-2(5H)-ylidene)malononitrile>

$^{1}$H-NMR Acetone-d6
1.91 (s 6H), 3.27 (s 3H), 3.75 (t 2H), 3.85 (t 2H), 7.00 (d 2H), 8.13 (d 2H)

$^{13}C$-NMR Acetone-d6
29.72, 39.59, 53.24, 55.18, 60.07, 91.63, 98.91, 112.98, 113.14, 113.94, 114.18, 114.29, 133.23, 155.31, 175.53, 178.55
DSC: mp 258°C

<Compound (E-5(12)): 2-(3-cyano-4-(4-(4-hydroxypiperidin-1-yl)phenyl)-5,5-dimethylfuran-2(5H)-ylidene)malononitrile>

$^{1}H$-NMR DMSO-d6
1.42 (m 2H), 1.81 (s 6H), 1.83 (m 2H), 3.35 (m 2H), 3.80 (m 1H), 3.90 (m 2H), 4.82 (d 1H), 7.13 (d 2H), 8.03 (d 2H)
$^{13}C$-NMR DMSO-d6
26.47, 33.62, 43.97, 50.97, 65.08, 90.22, 98.35, 112.43, 113.08, 113.17, 113.48, 113,48, 132.53, 153.68, 174.17, 177.78
DSC: mp 280°C (decomposition point)

<Compound (E-5(13)): 2-(3-cyano-4-(4-(3-hydroxymethyl)piperidin-1-yl)phenyl)-5,5-dimethylfuran-2(5H)-ylidene)malononitrile>

$^{1}H$-NMR DMSO-d6
1.32 (m 1H), 1.47 (m 1H), 1.67 (m 1H), 1.73 (m 2H), 1.807 (s 3H), 1.814 (s 3H), 2.96 (dd 1H), 3.15 (t 1H), 3.30 (m 1H), 3.35 (m 1H), 4.04 (d 1H), 4.09 (d 1H), 4.66 (t 1H), 7.10 (d 2H), 8.04 (d 2H)
$^{13}C$-NMR DMSO-d6
24.10, 26.48, 26.51, 26.67, 38.50, 47.34, 49.82, 50.78, 63.11, 89.82, 98.29, 112.48, 112.93, 113.54, 132.62, 153.77, 174.03, 177.78
DSC: mp 275°C

<Compound (E-5(14)): 2-(3-cyano-4-(2-hydroxymethyl)piperidin-1-yl)phenyl)-5,5-dimethylfuran-2(5H)-ylidene)malononitrile>

$^{1}H$-NMR DMSO-d6
1.43-1.68 (m 4H), 1.69-1.79 (m 1H), 1.81 (s 6H), 1.83-1.92 (m 1H), 3.13 (td 1H), 3.61 (t 2H), 3.98 (d 1H), 4.26 (d 1H), 4.85 (t 1H), 7.11 (d 2H), 8.02 (d 2H)
$^{13}C$-NMR DMSO-d6
18.27, 24.71 (24.83), 26.50 (26.56), 39.93, 41.59, 50.60, 55.04, 58.77, 89.45, 98.21, 112.52, 112.80, 113.10, 113.59, 113.61, 132.42, 154.84, 173.92, 177.80
DSC: mp 238°C

(Manufacturing of EO Polymers (EO-5(4)) to (EO-5(14)))

Using the base polymer (A-5a) and each of the compound (E-5(4)) to the compound (E-5(14)) obtained above, the reaction treatment was performed in the same manner as in the procedure described in the manufacturing of the EO polymer (EO-5a), thereby obtaining EO polymers (EO-5(4)) to (EO-5(14)) in which each of the compounds (E-5(4)) to (E-5(14)) was bonded to the base polymer. The glass transition temperature Tg of each EO polymer is shown in Table 5.

[Table 5]

| EO Polymer | Glass transition temperature |
|---|---|
| (EO-5(4)) | 169°C |
| (EO-5(5)) | 178°C |
| (EO-5(6)) | 181°C |

(continued)

| EO Polymer | Glass transition temperature |
|---|---|
| (EO-5(7)) | 184°C |
| (EO-5(8)) | 177°C |
| (EO-5(9)) | 186°C |
| (EO-5(10)) | 183°C |
| (EO-5(11)) | 180°C |
| (EO-5(12)) | 225°C |
| (EO-5(13)) | 200°C |
| (EO-5(14)) | 202°C |

[Example 15]

An EO polymer (EO-5(15)) in which a compound expressed by the following formula (E-5(15)) (hereinafter, referred to as "compound (E-5(15))" in some cases) was bonded to the base polymer was obtained by the following procedure.

[Chem. 33]

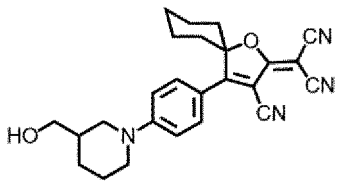

(E−5(15))

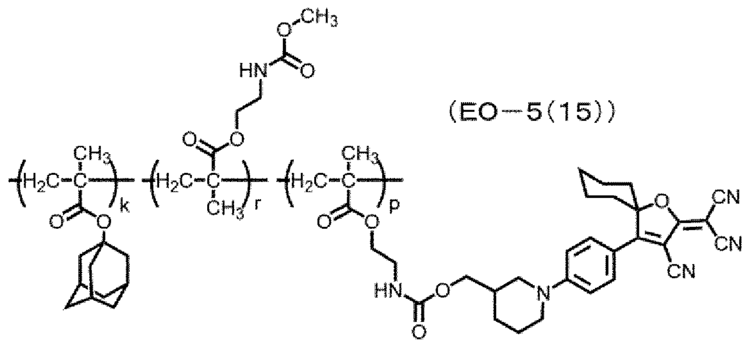

(EO−5(15))

[In the formulae, k, p, and r represent an integer of 1 or more.]

<Synthesis of 1-((trimethylsilyl)oxy)cyclohexane-1-carbonitrile (E5-1(3))>

[Chem. 34]

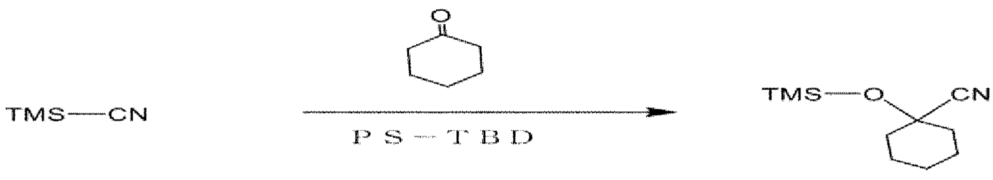


(E5-1(3))

103 mg (0.125 mmol) of 1,5,7-triazabicyclo[4,4,0]5-decenepolystyrene (PS-TBD) was added to 30 mL of dehydrated acetonitrile, and 9.00 g (91.7 mmol) of cyclohexanone and 9.80 g (98.8 mmol) of trimethylsilyl cyanide were added. After the reaction mixture was stirred at room temperature for 2.5 hours, PS-TBD was filtered, and a solvent was concentrated under reduced pressure, thereby obtaining 18.0 g of a compound expressed by the formula (E5-1(3)) (yield: 99%).

$^{1}H$-NMR analysis and $^{13}C$-NMR analysis of the compound expressed by the formula (E5-1(3)) were performed.

$^{1}H$-NMR $CDCl_3$
0.24 (s 9H), 1.20-1.30 (m 1H), 1.52-1.68 (m 5H), 1.69-1.80 (m 2H), 2.02-2.10 (m 2H) $^{13}C$-NMR $CDCl_3$
1.46, 22.67, 24.54, 39.37, 70.67, 122.01

<Synthesis of (4-fluorophenyl)(1-hydroxy-cyclohexyl)methanone (E5-2(3))>

[Chem. 35]

(E5-1(3))

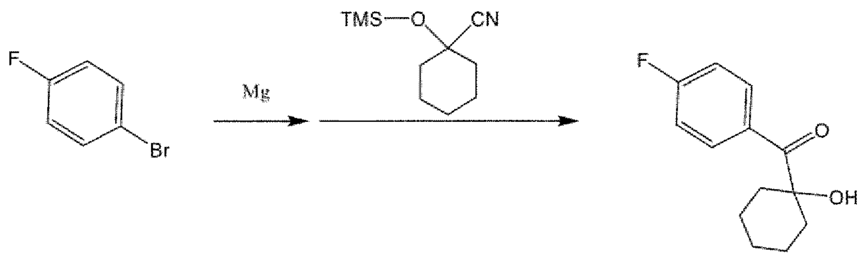


(E5-2(3))

18 mL of THF was added to 2.93 g (123 mmol) of magnesium with several drops of 1,2-dibromoethane and a solution of 18.3 g (105 mmol) of 4-bromofluorobenzene diluted with 9 mL of THF was added dropwise while being cooled with water and stirred. After the solution was continuously stirred at room temperature for three hours, a solution of 18.0 g (91.2 mmol) of the compound expressed by the formula (E5-1(3)) diluted with 20 mL of THF was added dropwise while being cooled with water and stirred. After stirred at room temperature for 16 hours, the solution was cooled under 10°C, and 100 mL of a 6 mol/L hydrochloric acid solution was slowly added dropwise. After the solution was stirred at room temperature for 2.5 hours, 37 g of sodium bicarbonate was added portionwise to the solution to neutralize the solution. The solution was extracted with 270 mL of ethyl acetate and 130 mL of 10% salt water. The solution extracted with ethyl acetate was washed with 10% salt water and then dried with anhydrous sodium sulfate, and the solvent was concentrated under reduced pressure, thereby obtaining a crude product of a compound expressed by the formula (E5-2(3)) (hereinafter, referred to as "compound (E5-2(3))" in some cases). The composition was purified by silica gel column chromatography (chloroform/ethyl acetate: 10/1) to obtain 4.12 g (18.5 mmol) of the compound (E5-2(3)) (yield: 20%, purity: about 70% (NMR)).

<Synthesis of 2-(3-cyano-4-(4-fluorophenyl)-1-oxaspiro[4,5]dec-3-en-2-ylidene)malononitrile (E5-3(3))>

[Chem. 36]

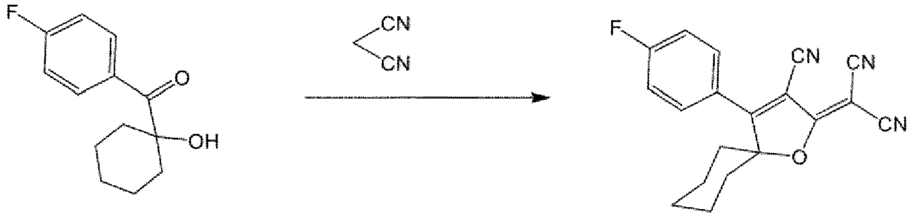

(E5-2(3)) (E5-3(3))

10.2 g (45.9 mmol) of the purified compound (E5-2(3)) and 14.0 g (212 mmol) of malononitrile were dissolved in 58 mL of pyridine, about 0.1 g of acetic acid was added, and stirred at room temperature for 91 hours. The reaction mixture was dispersed in 1150 mL of water, and precipitated crystals were filtered. The obtained crystals were washed with water, and then with methanol and dried under reduced pressure at 70°C, thereby obtaining 8.53 g (26.7 mmol) of the compound expressed by the formula (E5-3(3)) (yield: 58%).

On the compound expressed by the formula (E5-3(3)), $^{1}$H-NMR analysis and $^{13}$C-NMR analysis were performed, and the melting point was measured with a differential scanning calorimeter.

$^{1}$H-NMR $CDCl_3$
1.96-2.05 (m 2H), 2.13-2.21 (m 2H), 2.22-2.28 (m 2H), 2.28-2.37 (m H), 7.31 (dd 2H), 7.83 (dd 2H)
$^{13}$C-NMR $CDCl_3$
25.86, 39.58, 58.79, 102.00, 108.85, (110.48, 110.50), 111.35, (117.48, 117.63), (123.62, 123.60), (131.08, 131.15), 164.82, 166.54, 174.09, 175.08
DSC: mp 195°C

<Synthesis of Compound (E-5(15)) (2-(3-cyano-4-(4-((3-hydroxymethyl)piperidin-1-yl)phenyl)-1-oxaspiro[4,5]dec-3-en-2-ylidene)malononitrile)>

Using the compound expressed by the formula (E5-3(3)) and piperidin-3-ylmethanol, the reaction treatment was performed in the same manner as in the procedure described in the synthesis of (E-5), thereby obtaining the compound (E-5(15)) (yield: 76%).

On the compound (E-5(15)), $^{1}$H-NMR analysis and $^{13}$C-NMR analysis were performed, and the melting point was measured with a differential scanning calorimeter.

$^{1}$H-NMR DMSO-d6
1.33 (m 1H), 1.41-1.84 (m 10H), 1.92 (d 2H), 2.16 (m 2H), 2.97 (dd 1H), 3.15 (dd 1H), 3.29 (m 1H), 3.35 (m 1H), 4.03 (d 1H), 4.08 (d 1H), 4.65 (t 1H), 7.09 (d 2H), 8.08 (d 2H)
$^{13}$C-NMR DMSO-d6
21.76, 23.05, 24.06, 26.67, 34.37, 38.47, 47.35, 49.84, 51.02, 63.11, 90.43, 99.74, 112.52, 112.88, 113.18, 113.37, 113.56, 132.59, 153.70, 173.98, 177.82
DSC: mp 268°C

(Manufacturing of EO Polymer (EO-5(15)))

Using the base polymer (A-5a) and the compound (E-5(15)) obtained above, the reaction treatment was performed in the same manner as in the procedure described in the manufacturing of the EO polymer (EO-5a), thereby obtaining an EO polymer (EO-5(15)) in which the compound (E-5(15)) was bonded to the base polymer (glass transition temperature Tg: 202°C).

[Examples 16 and 17]

EO polymers (EO-5(16)) and (EO-5(17)) in which compounds expressed by the following formula (E-5(16)) and formula (E-5(17)) (hereinafter, referred to as "compound (E-5(16))" or the like in some cases) were bonded to the base polymer were obtained by the following procedure.

[Chem. 37]

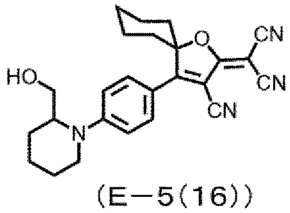

(E−5(16))

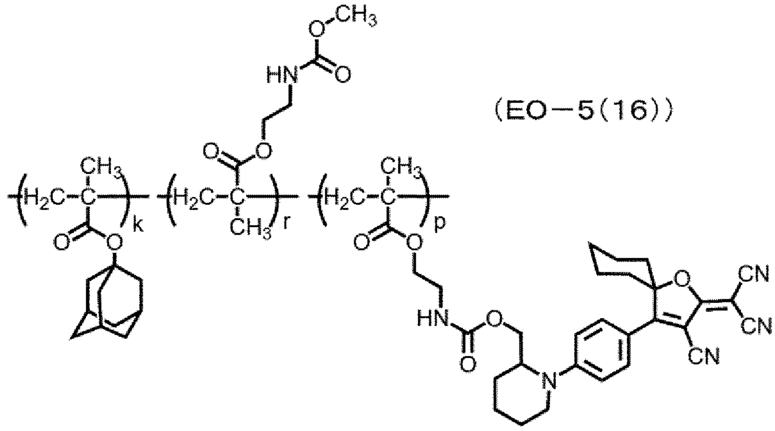

(EO−5(16))

[Chem. 38]

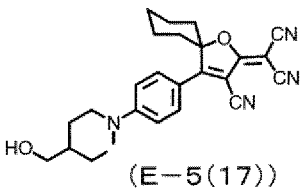

(E−5(17))

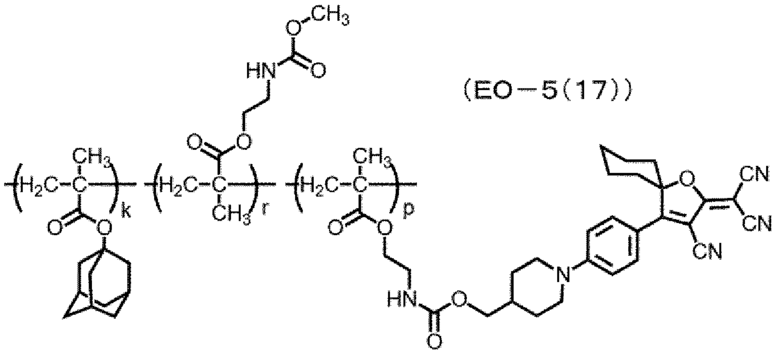

(EO−5(17))

[In the formulae, k, p, and r represent an integer of 1 or more.]

(Synthesis of Compounds (E-5(16)) and (E-5(17)))

Using the compound (E5-3(2)) and piperidin-2-ylmethanol, the reaction treatment was performed in the same manner as in the procedure described in the synthesis of (E-5), thereby obtaining the compound (E-5(16)) (yield: 10%). In addition, using the compound (E5-3(2)) and piperidin-4-ylmethanol, the reaction treatment was performed in the same manner as in the procedure described in the synthesis of (E-5), thereby obtaining the compound (E-5(17)) (yield: 79%).
On the compounds (E-5(16)) and (E-5(17)), $^{1}$H-NMR analysis and $^{13}$C-NMR analysis were performed, and the melting point was measured with a differential scanning calorimeter.

<Compound (E-5(16)): 2-(3-cyano-4-(4-((2-hydroxymethyl)piperidin-1-yl)phenyl)-1-oxaspiro[4,5]dec-3-en-2-ylidene)malononitrile>

$^{1}$H-NMR DMSO-d6
1.42-1.69 (m 7H), 1.70-1.83 (m 4H), 1.83-1.96 (m 3H), 2.12-2.23 (m 2H), 3.12 (td 1H), 3.61 (t 2H), 3.97 (d 1H), 4.24 (m 1H), 4.83 (t 1H), 7.11 (d 2H), 8.06 (d 2H)
$^{13}$C-NMR DMSO-d6
18.26, 21.76, 23.07, 24.71, 24.81, 34.37, 34.42, 39.95, 41.60, 50.86, 55.06, 58.77, 90.08, 99.66, 112.54, 113.03, 113.07, 113.41, 113.63, 132.38, 154.75, 173.87, 177.84 DSC: mp 229°C

<Compound (E-5(17)): 2-(3-cyano-4-(4-((4-hydroxymethyl)piperidin-1-yl)phenyl)-1-oxaspiro[4,5]dec-3-en-2-ylidene)malononitrile>

$^{1}$H-NMR DMSO-d6

1.12-1.30 (m 2H), 1.45-1.56 (m 1H), 1.56-1.68 (m 2H), 1.69-1.83 (m 6H), 1.92 (d 2H), 2.16 (td 2H), 3.06 (td 2H), 3.27 (t 2H), 4.16 (d 2H), 4.52 (t 1H), 7.11 (d 2H), 8.06 (d 2H)
$^{13}$C-NMR DMSO-d6
21.75, 23.08, 28.12, 34.35, 38.09, 46.42, 51.08, 65.20, 90.62, 99.77, 112.49, 113.00, 113.30, 113.36, 113.54, 132.52, 153.66, 174.06, 177.83
DSC: mp 264°C

(Manufacturing of EO Polymers (EO-5(16)) and (EO-5(17)))

Using the base polymer (A-5a) and each of the compound (E-5(16)) and the compound (E-5(17)) obtained above, the reaction treatment was performed in the same manner as in the procedure described in the manufacturing of the EO polymer (EO-5a), thereby obtaining EO polymers (EO-5(16)) and (EO-5(17)) in which each of the compounds (E-5(16)) and (E-5(17)) was bonded to the base polymer (glass transition temperatures Tg were 207 °C and 209 °C, respectively).

[Example 18]

An EO polymer (EO-5(18)) in which the compound (E-5(17)) was bonded to the base polymer was obtained by the following procedure.

[Chem. 39]

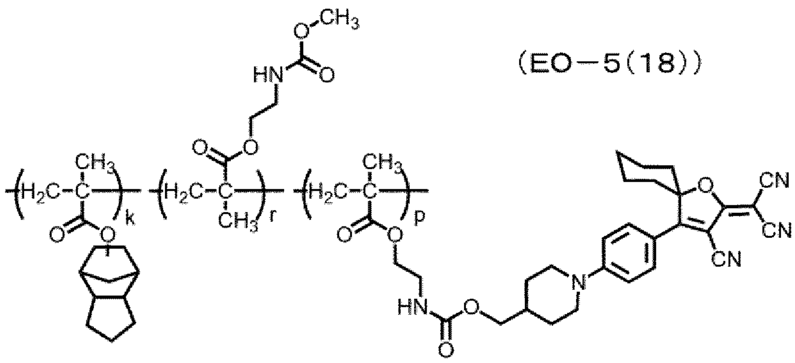

(EO−5(18))

[In the formulae, k, p, and r represent an integer of 1 or more.]

(Synthesis of Base Polymer (A-5b))

7.00 g (31.8 mmol) of dicyclopentanyl methacrylate (DCPMA), 2.60 g (16.8 mmol) of 2-(isocyanatoethyl) methacrylate (MOI) and 0.266 g (1.62 mmol) of azobisisobutyronitrile (AIBN) were dissolved in 18 mL of dehydrated toluene, argon was encapsulated, and then the solution was stirred in an oil bath at 74°C for two hours. The reaction mixture was cooled to room temperature, diluted with 10 mL of dehydrated toluene and then added dropwise to 450 mL of dehydrated diisopropyl ether (IPE) to filter the precipitate. The precipitate was sequentially washed with dehydrated IPE and dehydrated hexane, then, dried under reduced pressure at 45°C, thereby obtaining 7.14 g of a base polymer (A-5b).

(Derivatization of Base Polymer (A-5b) (Methyl Carbamate Derivative))

Under Ar gas, 1.0 g of the base polymer (A-5b) was dissolved in 50 mL of dehydrated tetrahydrofuran, 4 mL of dehydrated methanol and 40 μL of dibutyltin dilaurate (DBTDL) were added, and the solution was stirred in an oil bath at 55°C for two hours. The reaction mixture was cooled, then, poured into 950 mL of diisopropyl ether (IPE) and stirred. A precipitated powder was filtered, washed with 200 mL of IPE and 100 mL of hexane and dried under reduced pressure with heating at 65 °C, thereby obtaining a derivative of the base polymer (A-5b).

As a result of analyzing the derivative of the base polymer (A-5b) in the same manner as in the analysis of the derivative of the base polymer (A-1), the glass transition temperature Tg was 155 °C, the weight-average molecular weight Mw was 64700, and the number-average molecular weight Mn was 26900.

(Manufacturing of EO Polymer (EO-5(18)))

0.354 g (0.854 mmol) of the compound (E-5(17)) and 0.700 g (1.23 mmol) of the base polymer (A-5b) were dissolved in 50 mL of tetrahydrofuran (THF). 100 μL of dibutyltin dilaurate (DBTDL) was added to this, and the solution was stirred in an oil bath at 55°C for two hours. Next, 4 mL of dehydrated methanol was added and stirred at the same temperature for one hour. The reaction mixture was cooled, then, poured into 600 mL of diisopropyl ether (IPE) and stirred. A precipitated powder was filtered, washed with 100 mL of IPE:THF = 10:1 mixture twice, then 50 mL of IPE twice, and further 50 mL of n-hexane, and dried under reduced pressure at 70°C. 0.753 g of the EO polymer (EO-5(18)) was obtained as a reddish orange powder (glass transition temperature Tg: 179°C).

[Example 19]

An EO polymer (EO-5(19)) in which a compound expressed by the following formula (E-5(19)) (hereinafter, referred to as "compound (E-5(19))" in some cases) was bonded to the base polymer was obtained by the following procedure.

[Chem. 40]

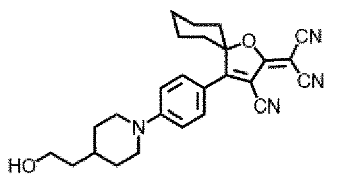

(E−5(19))

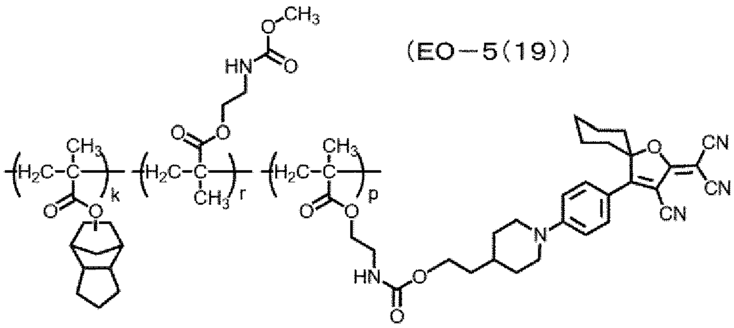

(EO−5(19))

Using the compound (E5-3(2)) and 2-(piperidine-4-yl)ethan-1-ol, the reaction treatment was performed in the same manner as in the procedure described in the synthesis of (E-5), thereby obtaining the compound (E-5(19)) (yield: 42%).

On the compound (E-5(19)), $^{1}$H-NMR analysis and $^{13}$C-NMR analysis were performed, and the melting point was measured with a differential scanning calorimeter.

<Compound (E-5(19)): 2-(3-cyano-4-(4-(4-(2-hydroxyethyl)piperidin-1-yl)phenyl)-1-oxaspiro[4,5]dec-3-en-2-ylidene)malononitrile>

$^{1}$H-NMR DMSO-d6
1.10-1.20 (m 2H), 1.35-1.42 (m 2H), 1.43-1.68 (m 3H), 1.72-1.81 (m 6H), 1.92 (d 2H), 2.16 (td 2H), 3.06 (t 2H), 3.45 (t 2H), 4.14 (d 2H), 4.40 (t 1H), 7.11 (d 2H), 8.06 (d 2H) $^{13}$C-NMR DMSO-d6
21.75, 23.08, 31.48, 31.95, 34.35, 38.71, 46.68, 51.09, 58.00, 90.62, 99.76, 112.49, 112.99, 113.30, 113.36, 113.54, 132.52, 153.66, 174.05, 177.82
DSC: mp 236°C

(Manufacturing of EO Polymer (EO-5(19)))

Using the base polymer (A-5b) and the compound (E-5(19)), the reaction treatment was performed in the same manner as in the procedure described in the manufacturing of the EO polymer (EO-5(18)), thereby obtaining an EO polymer (EO-5(19)) in which the compound (E-5(19)) was bonded to the base polymer (glass transition temperature Tg: 176°C).

[Synthesis Example 1]

A compound expressed by the following formula (E-5(20)) (hereinafter, referred to as "compound (E-5(20))" in

some cases) was obtained by the following procedure.

[Chem. 41]

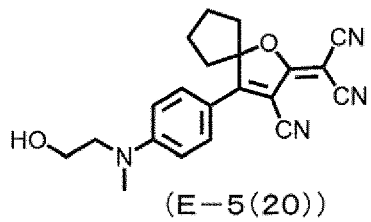

(E-5(20))

<Synthesis of 1-((trimethylsilyl)oxy)cyclopentane-1-carbonitrile (E5-1(2))>

[Chem. 42]

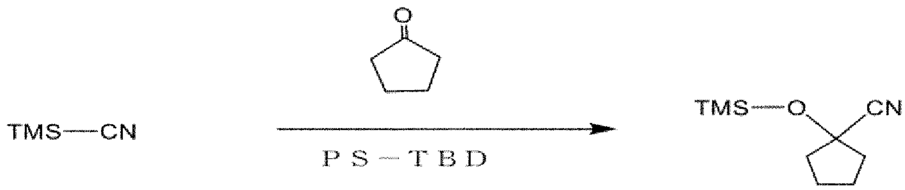


(E5-1(2))

41 mg (0.050 mmol) of 1,5,7-triazabicyclo[4,4,0]5-decenepolystyrene (PS-TBD) was added to 50 mL of dehydrated acetonitrile, and 3.58 g (42.6 mmol) of cyclopentanone and 3.50 g (35.3 mmol) of trimethylsilyl cyanide were added. After the reaction mixture was stirred at room temperature for three hours, PS-TBD was filtered, and a solvent was concentrated under reduced pressure, thereby obtaining 6.05 g of a compound expressed by the formula (E5-1(2)) (yield: 94%).

$^1$H-NMR analysis and $^{13}$C-NMR analysis of the compound expressed by the formula (E5-1(2)) were performed.

$^1$H-NMR $CDCl_3$
0.24 (s 9H), 1.73-1.88 (m 4H), 1.94-2.03 (m 2H), 2.05-2.19 (m 2H)
$^{13}$C-NMR $CDCl_3$
1.11, 22.62, 41.72, 74.47, 122.65

<Synthesis of (4-fluorophenyl)(1-hydroxy-cyclopentyl)methanone (E5-2 (2))>

[Chem. 43]

(E5-1(2))

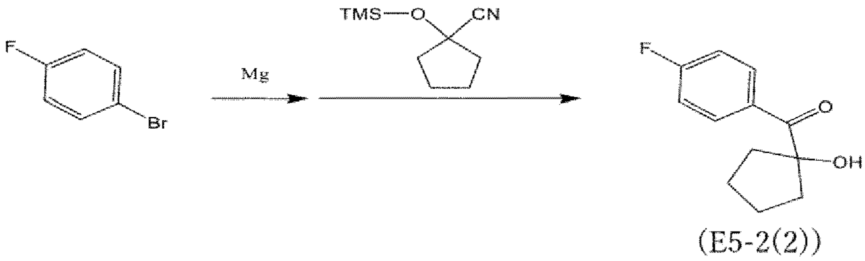


(E5-2(2))

10 mL of THF was added to 1.05 g (43.2 mmol) of magnesium with two drops of 1,2-dibromoethane, and a

solution of 7.88 g (45.0 mmol) of 4-bromofluorobenzene diluted with 2 mL of THF was added dropwise while being cooled with water and stirred. After the solution was continuously stirred at room temperature for 90 minutes, a solution of 6.05 g (33.0 mmol) of the compound expressed by the formula (E5-1(2)) diluted with 3 mL of THF was added dropwise while being cooled with water and stirred. After stirred at room temperature for 18 hours, the solution was cooled under 10°C, and 20 mL of a 6 mol/L hydrochloric acid solution was slowly added dropwise. After the solution was stirred at room temperature for 2.5 hours, 40 g of sodium bicarbonate was added portionwise to the solution to neutralize the solution. The solution was extracted with 150 mL of ethyl acetate and 100 mL of 10% salt water. The solution extracted with ethyl acetate was washed with 10% salt water and then dried with anhydrous sodium sulfate, and the solvent was concentrated under reduced pressure, thereby obtaining a crude product of a compound expressed by the formula (E5-2(2)) (hereinafter, referred to as "compound (E5-2(2))" in some cases). The composition was purified by silica gel column chromatography (chloroform/ethyl acetate: 10/1) to obtain 2.48 g (58.1 mmol) of the compound (E5-2(2)) (yield: 36%).

<Synthesis of 2-(3-cyano-4-(4-fluorophenyl)-1-oxaspiro[4,4]non-3-en-2-ylidene)malononitrile (E5-3(2))>

[Chem. 44]

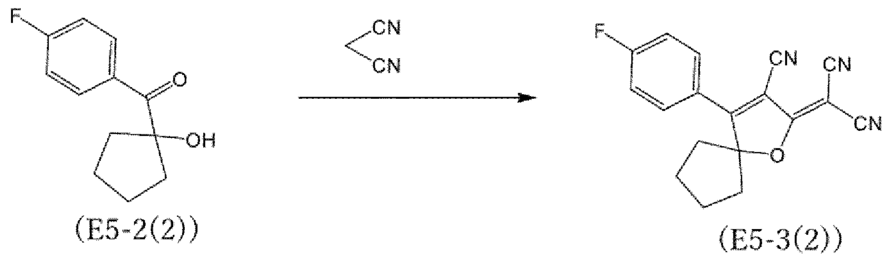

(E5-2(2)) (E5-3(2))

1.57 g (7.54 mmol) of the compound (E5-2(2)) and 1.50 g (22.7 mmol) of malononitrile were dissolved in 12 mL of pyridine, about 0.05 g of acetic acid was added, and stirred at room temperature for 65 hours. The reaction mixture was dispersed in 240 mL of water, precipitated crystals were filtered. The obtained crystals were washed with water, and then with methanol and dried under reduced pressure at 70°C, thereby obtaining 1.79 g (5.86 mmol) of the compound expressed by the formula (E5-3(2)) (yield: 78%).

On the compound expressed by the formula (E5-3(2)), $^{1}$H-NMR analysis and $^{13}$C-NMR analysis were performed, and the melting point was measured with a differential scanning calorimeter.

$^{1}$H-NMR $CDCl_3$
1.96-2.05 (m 2H), 2.13-2.21 (m 2H), 2.22-2.28 (m 2H), 2.28-2.37 (m 2H), 7.31 (dd 2H), 7.83 (dd 2H)
$^{13}$C-NMR $CDCl_3$
25.86, 39.58, 58.79, 102.00, 108.85, (110.48, 110.50), 111.35, (117.48, 117.63), (123.62, 123.60), (131.08, 131.15), 164.82, 166.54, 174.09, 175.08
DSC: mp 205°C

<Synthesis of Compound (E-5(20)) (2-(3-cyano-4-(4-((2-hydroxyethyl)(methyl)amino)phenyl)-1-oxaspiro[4,4]non-3-en-2-ylidenemalononitrile)>

Using the compound (E5-3(2)) and methyl-2-hydroxyethylamine, the reaction treatment was performed in the same manner as in the procedure described in the synthesis of (E-5), thereby obtaining the compound (E-5(20)) (yield: 25%).

On the compound (E-5(20)), $^{1}$H-NMR analysis and $^{13}$C-NMR analysis were performed, and the melting point was measured with a differential scanning calorimeter.

$^{1}$H-NMR Acetone-d6
2.07-2.21 (m 4H), 2.27-2.33 (m 2H), 2.47-2.54 (m 2H), 3.27 (s 3H), 3.75 (t 2H), 3.82 (t 2H), 7.02 (d 2H), 8.05 (d 2H))
$^{13}$C-NMR Acetone-d6
29.59, 39.59, 41.84, 53.05, 55.17, 59.94, 60.06, 91.78, 108.64, 113.05, 113.16, 113.95, 114.53, 132.93, 155.27, 173.18, 178.41
DSC: mp 265°C

[Synthesis Example 2]

A compound expressed by the following formula (E-5(21)) (hereinafter, referred to as "compound (E-5(21))" in some cases) was obtained by the following procedure.

[Chem. 45]

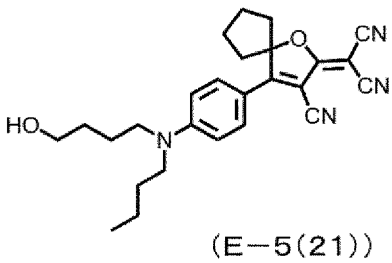

(E−5(21))

<Synthesis of Compound (E-5(21)) (2-(4-(4-(butyl(4-hydroxybutyl)amino)phenyl)-3-cyano-1-oxaspiro[4,4]non-3-en-2-ylidenemalononitrile)>

Using the compound (E5-3(2)) and butyl-4-hydroxybutylamine, the reaction treatment was performed in the same manner as in the procedure described in the synthesis of (E-5), thereby obtaining the compound (E-5(21)) (yield: 43%).

On the compound (E-5(21)), $^{1}$H-NMR analysis and $^{13}$C-NMR analysis were performed, and the melting point was measured with a differential scanning calorimeter.

$^{1}$H-NMR Acetone-d6
0.99 (t 3H), 1.41 (td 2H), 1.45 (t 1H), 1.64 (m 4H), 1.75 (m 2H), 2.06 (m 2H), 2.16 (m 2H), 2.23 (m 2H), 2.37 (m 2H), 3.42 (t 2H), 3.47 (t 2H), 3.74 (t 2H), 6.71 (d 2H), 7.93 (d 2H)
$^{13}$C-NMR Acetone-d6
13.88, 20.22, 23.94, 26.29, 29.40, 29.66, 41.46, 51.10, 51.12, 53.65, 62.30, 91.09, 107.18, 111.92, 112.18, 113.13, 113.28, 113.58, 132.28, 152.67, 171.59, 177.10
DSC: mp 217°C

INDUSTRIAL APPLICABILITY

The polymer of the present invention can be used as an electro-optic material applied to optical control elements such as optical modulators, optical switches, optical transceivers, optical phased arrays, LiDAR, smart glasses, optical interconnects, optoelectronic circuits, wavelength converters, electric field sensors, and THz wave generators/detectors. The polymer of the present invention can be suitably used for an optical control element highly efficient in shorter wavelength bands than the C band.

REFERENCE SIGNS LIST

10a, 10b arm portion, 11 core, 12 clad, 15 upper electrode, 16 lower electrode.

**Claims**

1. A polymer represented by the formula (1):

[Chem. 1]

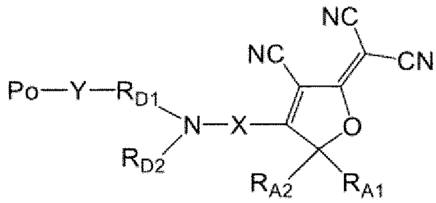

(1)

[in the formula (1),

$R_{A1}$ and $R_{A2}$ each independently represent an alkyl group having 1 to 10 carbon atoms, an aryl group having 6 to 12 carbon atoms, or an alkyl aryl group having 7 to 15 carbon atoms; hydrogen atoms contained in the alkyl group, the aryl group, and the alkyl aryl group are optionally substituted with halogen atoms; and $R_{A1}$ and $R_{A2}$ are optionally linked to each other to form a 3- to 12-membered saturated alicyclic structure together with a carbon atom to which they are bonded,

X represents a phenylene group, an ethylene group, or a phenylenevinylene group,

$R_{D1}$ represents an alkanediyl group having 1 to 10 carbon atoms; $R_{D2}$ represents an alkyl group having 1 to 10 carbon atoms; and any carbon atoms contained in $R_{D1}$ and $R_{D2}$ are optionally linked to each other to form a 3- to 12-membered saturated heterocyclic structure together with a nitrogen atom to which $R_{D1}$ and $R_{D2}$ are bonded,

Y represents a linking group, and

Po represents a polymer structure].

**2.** The polymer according to claim 1, wherein

in the formula (1),

$R_{A1}$ represents an alkyl group having 1 to 10 carbon atoms,

$R_{A2}$ represents a group in which at least one hydrogen atom contained in a halogenated aryl group having 6 to 12 carbon atoms or an alkyl aryl group having 7 to 15 carbon atoms is substituted with a halogen atom, and

X represents a phenylenevinylene group.

**3.** The polymer according to claim 1, wherein

in the formula (1),

$R_{A1}$ and $R_{A2}$ each independently represent an alkyl group having 1 to 10 carbon atoms; and $R_{A1}$ and $R_{A2}$ are optionally linked to each other to form a 3- to 12-membered saturated alicyclic structure together with a carbon atom to which they are bonded, and

X represents a phenylene group.

**4.** The polymer according to any one of claims 1 to 3, wherein Y in the formula (1) represents a urethane bond.

**5.** The polymer according to any one of claims 1 to 4, wherein Po in the formula (1) represents a (meth)acrylic polymer structure.

**6.** An optical control element having an optical waveguide formed of the polymer according to any one of claims 1 to 5.

FIG.1

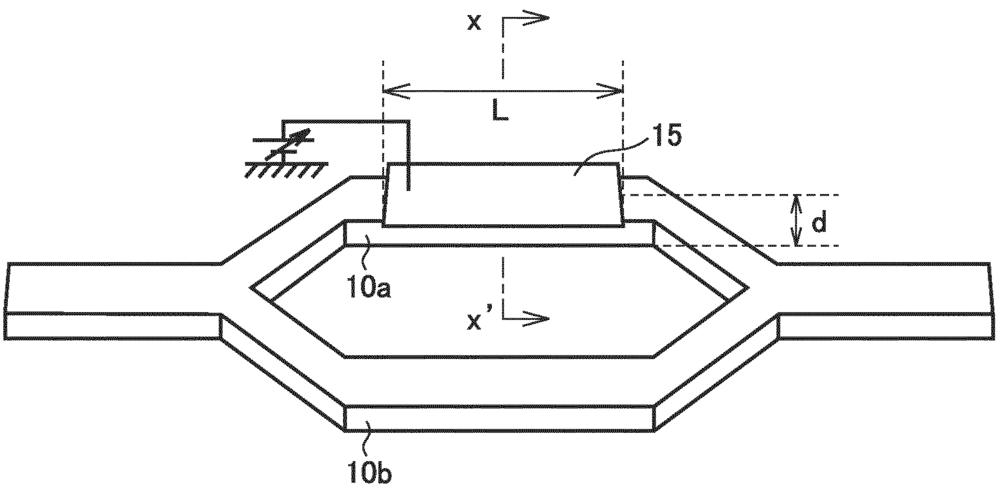

FIG.2

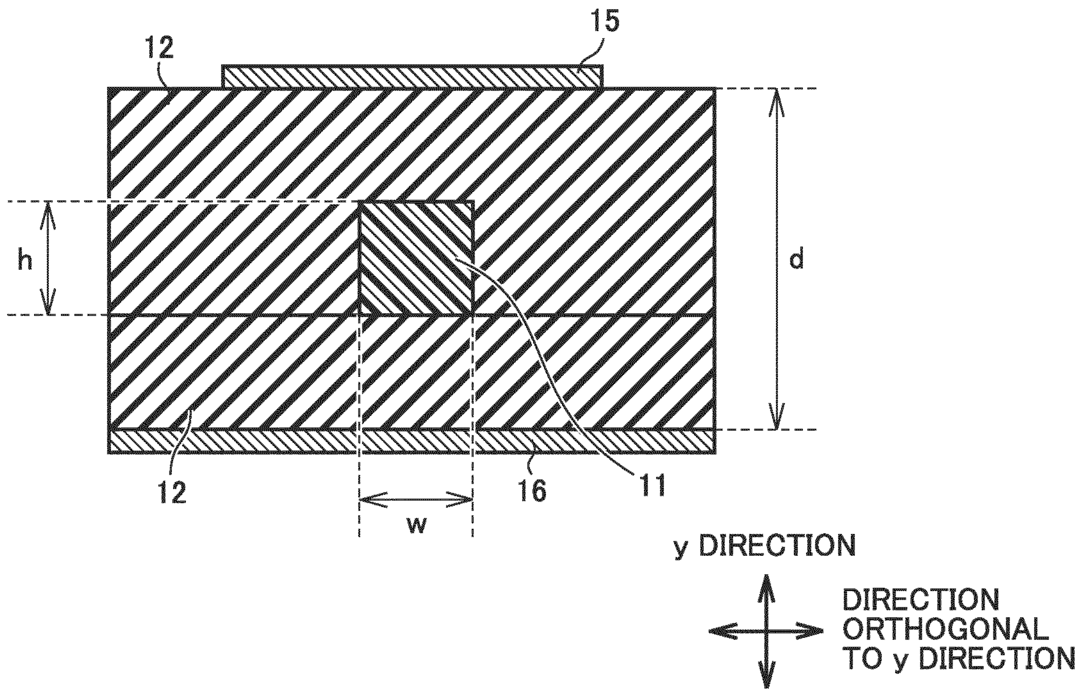
15
12
h
d
11
12
16
w
y DIRECTION
DIRECTION ORTHOGONAL TO y DIRECTION

FIG.3

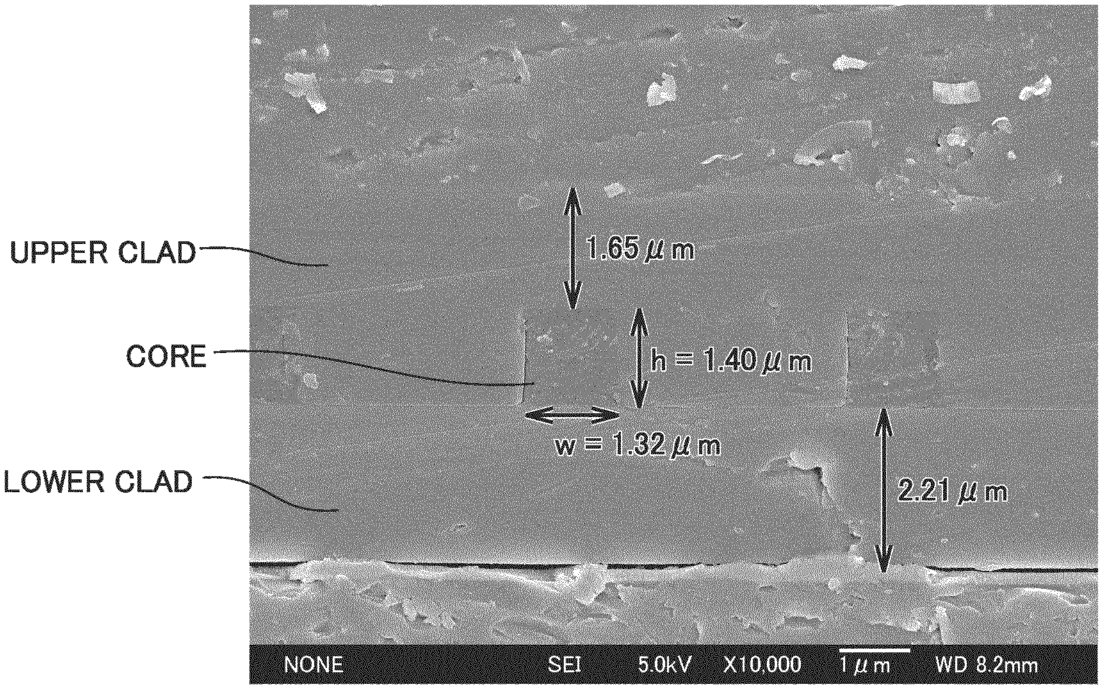
UPPER CLAD
CORE
LOWER CLAD
1.65 μm
h = 1.40 μm
w = 1.32 μm
2.21 μm
NONE
SEI
5.0kV
X10,000
1 μm
WD 8.2mm

FIG.4

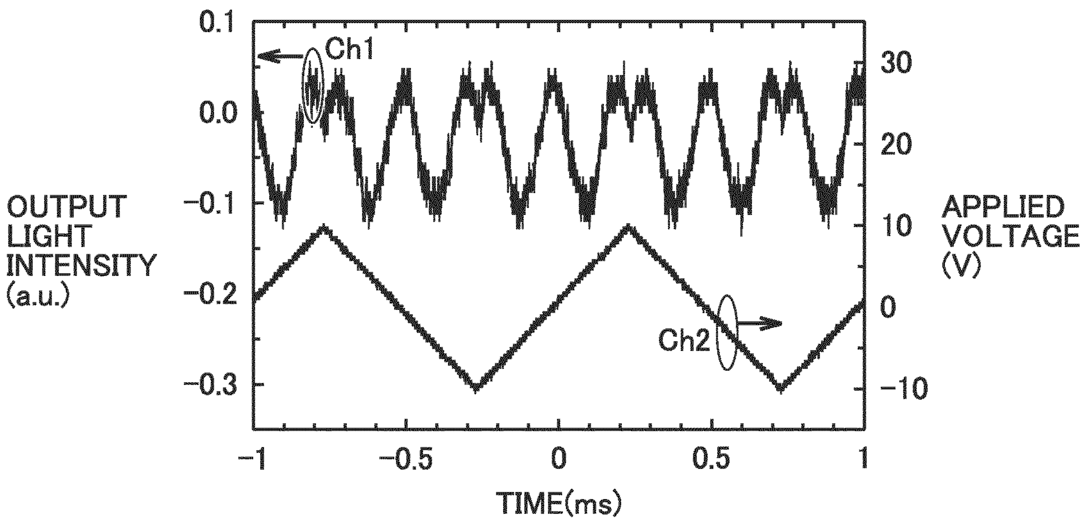
0.1
0.0
-0.1
-0.2
-0.3
OUTPUT
LIGHT
INTENSITY
(a.u.)
Ch1
Ch2
30
20
10
0
-10
APPLIED
VOLTAGE
(V)
-1
-0.5
0
0.5
1
TIME(ms)

FIG.5

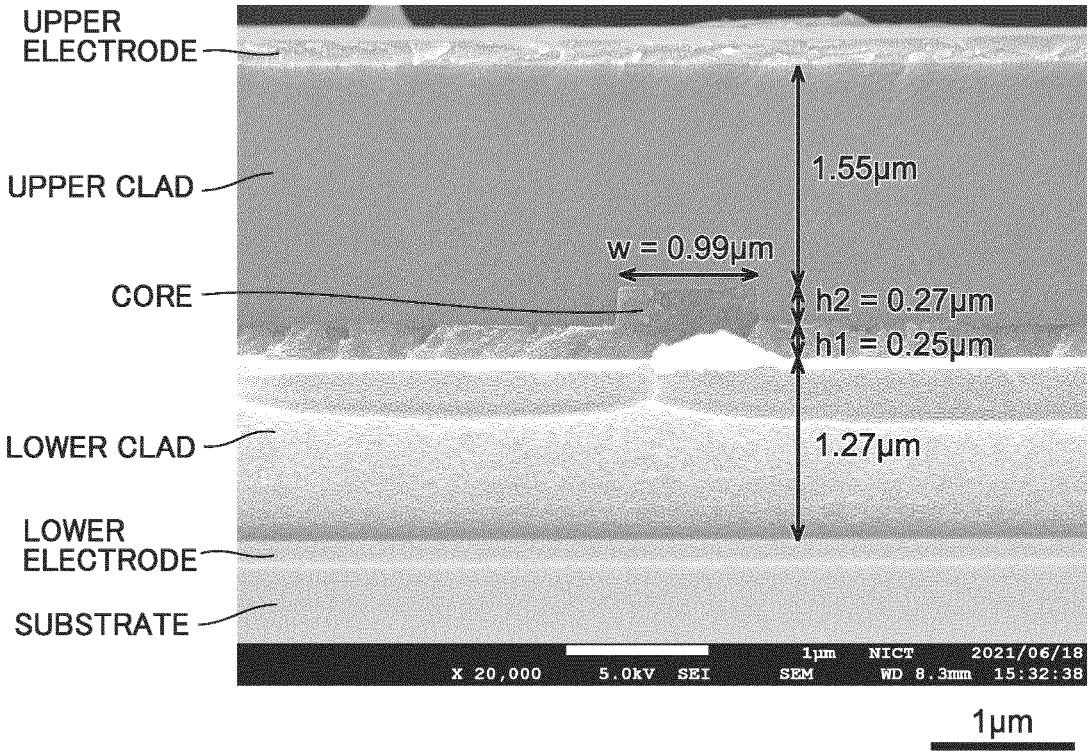
UPPER ELECTRODE
UPPER CLAD
CORE
LOWER CLAD
LOWER ELECTRODE
SUBSTRATE
1.55μm
w = 0.99μm
h2 = 0.27μm
h1 = 0.25μm
1.27μm
1μm NICT 2021/06/18
X 20,000 5.0kV SEI SEM WD 8.3mm 15:32:38
1μm

FIG.6

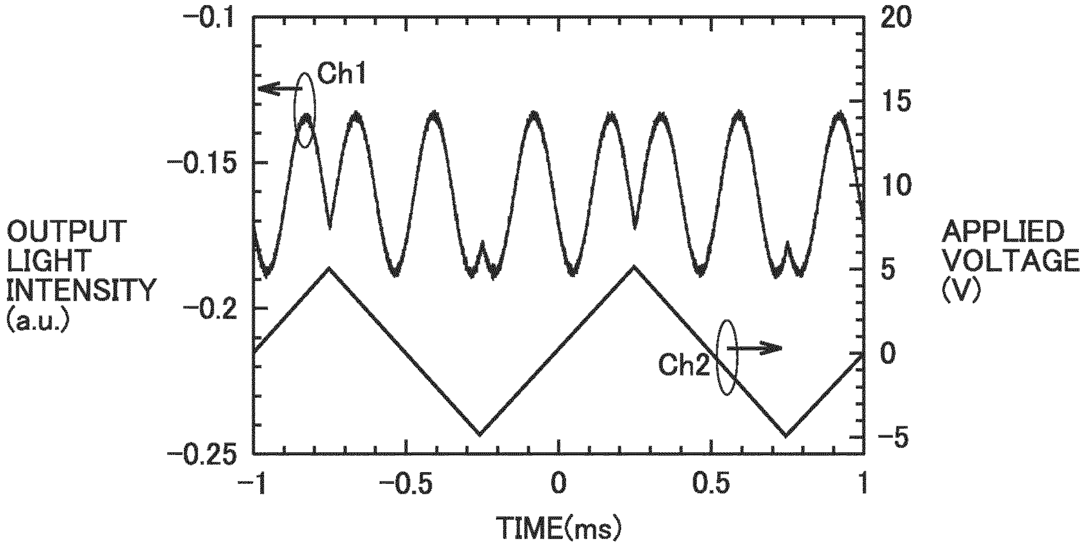
-0.1
-0.15
-0.2
-0.25
OUTPUT
LIGHT
INTENSITY
(a.u.)
20
15
10
5
0
-5
APPLIED
VOLTAGE
(V)
Ch1
Ch2
-1
-0.5
0
0.5
1
TIME(ms)

## INTERNATIONAL SEARCH REPORT

International application No.
**PCT/JP2022/028374**

**A. CLASSIFICATION OF SUBJECT MATTER**

***C08F 8/00***(2006.01)i; ***C08F 20/36***(2006.01)i; ***G02F 1/061***(2006.01)i; ***G02F 1/361***(2006.01)i
FI: C08F8/00; C08F20/36; G02F1/061 501; G02F1/361

According to International Patent Classification (IPC) or to both national classification and IPC

**B. FIELDS SEARCHED**

Minimum documentation searched (classification system followed by classification symbols)

C08F8/00; C08F20/36; G02F1/061; G02F1/361

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | CN 104744896 A (CHINESE ACAD TECH INST PHYSICS) 01 July 2015 (2015-07-01)<br>claims, paragraphs [0002]-[0004] | 1, 5-6<br>2-4 |
| X<br>A | CN 103304721 A (CHINESE ACAD TECH INST PHYSICS) 18 September 2013 (2013-09-18)<br>claims, paragraphs [0002]-[0003], examples | 1, 5-6<br>2-4 |
| X<br>A | CN 103289070 A (CHINESE ACAD TECH INST PHYSICS) 11 September 2013 (2013-09-11)<br>claims, examples | 1, 6<br>2-5 |
| X | LI, Suyue et al. Synthesis and properties of two second-order nonlinear optical polymers: an attempt toward the balance between nonlinearity and transparence against intrinsic trade-off. Chinese Journal of Chemistry. 2008, vol. 26, pp. 328-332, DOI: 10.1002/cjoc.200890063<br>abstract, introduction, experimental, scheme 1 | 1, 6 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 September 2022** | **20 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

INTERNATIONAL SEARCH REPORT

International application No.
PCT/JP2022/028374

C. DOCUMENTS CONSIDERED TO BE RELEVANT

| Category* | Citation of document, with indication, where appropriate, of the relevant passages | Relevant to claim No. |
|---|---|---|
| X | WEI, You et al. Fully Functionalized Photorefractive Polymer with Infrared Sensitivity Based on Novel Chromophores. Macromolecules. 2003, vol. 36, pp. 7014-7019, DOI: 10.1021/ma034587o<br>abstract, introduction, Results and Discussion, scheme 1.2 | 1, 6 |
| X | CHEN, Lujian et al. Effect of triphenylamine agents as screening moieties for electrostatic interaction in the nonlinear optical response of hybrid organic-inorganic films. Thin Solid Films. 03 December 2007, vol. 516, pp. 4153-4158, DOI: 10.1016/j.tsf.2007.10.120<br>abstract, 1. Introduction, 2. Experimental part | 1, 6 |
| X | CHEN, Lujian et al. Dipolar orientation stabilities of hybrid films for second-order nonlinear optical applications. J Sol-Gel Sci Technol. 23 May 2007, vol. 43, pp. 329-335, DOI: 10.1007/s10971-007-1582-2<br>abstract, 2 Materials processing, fig. 1 | 1, 4-6 |
| A | JP 2004-505299 A (REVEO, INC.) 19 February 2004 (2004-02-19)<br>claims, fig. 9 | 1-6 |
| A | JP 11-511866 A (THE GOVERNMENT OF UNITED STATES OF AMERICA) 12 October 1999 (1999-10-12)<br>claims, Technical field | 1-6 |
| A | JP 7-165898 A (AKZO NOBEL NV) 27 June 1995 (1995-06-27)<br>claims, paragraphs [0001]-[0003] | 1-6 |

Form PCT/ISA/210 (second sheet) (January 2015)

**INTERNATIONAL SEARCH REPORT**
**Information on patent family members**

International application No.
**PCT/JP2022/028374**

| Patent document cited in search report | Publication date (day/month/year) | Patent family member(s) | Publication date (day/month/year) |
|---|---|---|---|
| CN 104744896 A | 01 July 2015 | (Family: none) | |
| CN 103304721 A | 18 September 2013 | (Family: none) | |
| CN 103289070 A | 11 September 2013 | (Family: none) | |
| JP 2004-505299 A | 19 February 2004 | US 6106743 A<br>claims<br>CN 1636164 A<br>claims, fig. 9<br>WO 2000/015732 A1<br>CA 2343306 A | |
| JP 11-511866 A | 12 October 1999 | US 5520968 A<br>claims, Technical field<br>WO 1996/034928 A1<br>EP 824576 A1 | |
| JP 7-165898 A | 27 June 1995 | US 5588083 A<br>claims, Background of the prior art<br>WO 1994/008269 A1<br>EP 645413 A1<br>CA 2133142 A<br>TW 296392 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2011024774 A
- WO 2019151318 A
- WO 2018003842 A


### Non-patent literature cited in the description


- Organic Material For Nonlinear Optics. The Chemical Society of Japan, 1992
- Organic Nonlinear Optical Materials. Gordon and Breach Publishers, 1995
- Recent Advance on Photonic Organic Materials for Information and Telecommunication Applications. CMC Publishing Co., Ltd, 2007
- **LARRY R. DALTON.** Organic Electro-Optics and Photonics. Cambridge University Press, 2015
- **TOSHIKI YAMADA ; AKIRA OTOMO.** Transmission ellipsometric method without an aperture for simple and reliable evaluation of electro-optic properties. *Optics Express,* 2013, vol. 21, 29240-48